# EUROPÄISCHE PATENTSCHRIFT

(11) **EP 2 516 124 B1**
(45) Veröffentlichungstag und Bekanntmachung des Hinweises auf die Patenterteilung: **29.07.2020**
(21) Anmeldenummer: 10788331.6
(22) Anmeldetag: 09.12.2010
(51) Int. Cl.: B29C 33/52, B29D 11/00

(54) **VERFAHREN ZUM HERSTELLEN EINES OPTISCHEN BAUTEILS SOWIE OPTISCHES BAUTEIL**
METHOD FOR PRODUCING AN OPTICAL STRUCTURE AND OPTICAL COMPONENT
PROCÉDÉ POUR FABRIQUER UNE STRUCTURE OPTIQUE ET STRUTURE OPTIQUE

(30) Priorität: 21.12.2009 DE 102009055088
(43) Veröffentlichungstag der Anmeldung: 31.10.2012
(73) Patentinhaber: Fraunhofer-Gesellschaft zur Förderung der angewandten Forschung e.V., 80686 München (DE)
(72) Erfinder: WIPPERMANN, Frank, 98617 Meiningen (DE); DUPARRE, Jaques, 07745 Jena (DE); DANNBERG, Peter, 07745 Jena (DE); BRÄUER, Andreas, Schlöben 07646 (DE)
(74) Vertreter: Schenk, Markus
(86) Internationale Anmeldenummer: PCT/EP2010/069293
(87) Internationale Veröffentlichungsnummer: WO 2011/085879

(56) Entgegenhaltungen:
- EP-A1- 0 543 202
- EP-A1- 1 000 596
- EP-A1- 1 705 507
- US-A1- 2005 030 647
- US-A1- 2008 143 019

## Beschreibung

Die vorliegende Erfindung bezieht sich auf ein Konzept zur Herstellung eines optischen Bauteils aus aushärtbarem Material, wie es beispielsweise eine optische Linse sein kann.

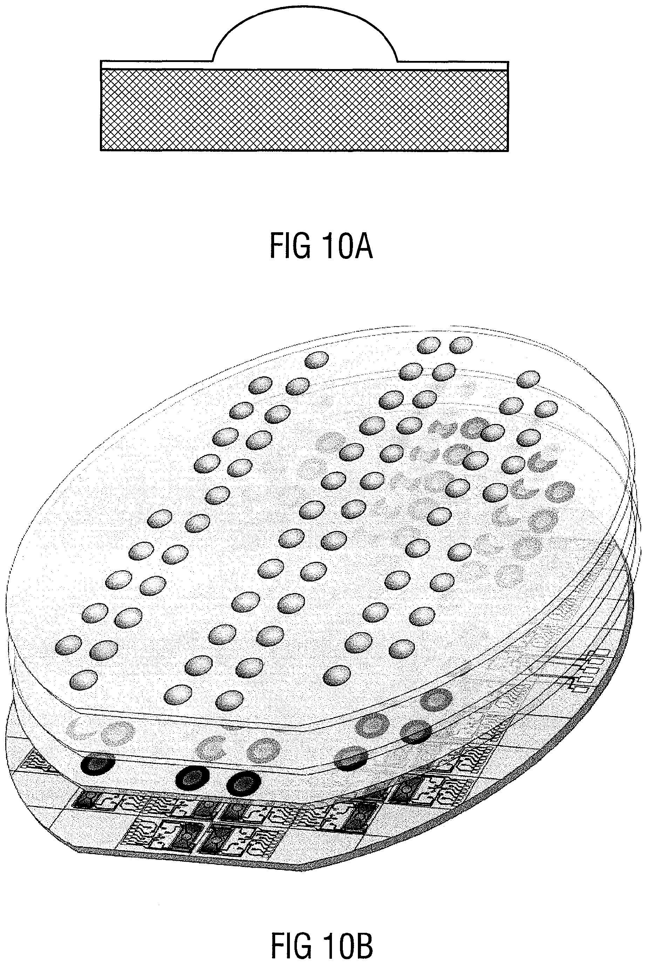

Die parallelisierte Herstellung optischer Mikrostrukturen im Nutzen, wie z.B. Linsen für Mikrobjektive für den Einsatz in Mobiltelefonen, basiert auf der Nutzung von Glassubstraten, auf denen die optischen Strukturen z.B. durch UV-Replikation aufgebracht werden. Fig. 10a zeigt eine auf einem Glassubstrat durch UV-Replikation abgeformte Linse.

Aus mechanischen Gründen dürfen die Substrate eine kritische Dicke während der Herstellung und auch im Betrieb nicht unterschreiten, wobei die erforderliche Dicke mit steigendem Substratdurchmesser zunimmt und bei einem 8" Substrat etwa 400 µm beträgt. Da sich ein bzw. mehrere Substrate im Strahlengang des optischen Systems befinden, beeinflusst eine große Dicke der Substrate die Eigenschaften der Systeme zweifach. Zum Einen vergrößert sich die Baulänge der Optik und zum Anderen können große Linsendicken zu optischen Abbildungsfehlern führen. Werden zur Erfüllung der Funktion mehrere Linsen in axialer Richtung benötigt, werden mehrere Substrate mit Linsenarrays übereinander gestapelt und miteinander verbunden. Lufträume in axialer Richtung zwischen den Linsen erfordern dabei zusätzliche Substrate mit Durchgangslöchern, die in hoher Präzision zu fertigen und zu fügen sind.

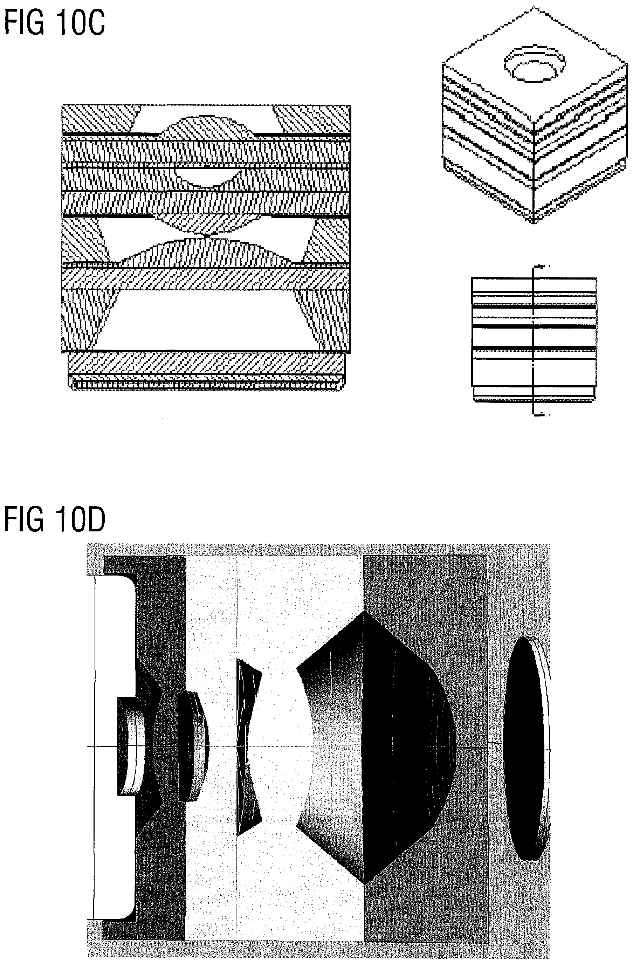

Die Fig. 10b und 10c zeigen Stapel von Wafern mit Linsenfeldern und Abstandswafern (sogenannte "Spacerwafer"). In Fig. 10c sind Abstandswafer zwischen jeder einzelnen Linsenstruktur deutlich zu erkennen, wodurch die Baulänge der Optik erhöht wird. Neuere Ansätze, wie die sogenannte "monolithic lens technology" von AJI kommen ohne Verwendung eines Glasträgers aus und bestehen aus UV-replizierbarem Polymermaterial und können die Spacerstrukturen zur Erzeugung von Lufträumen in axialer Richtung zwischen den Linsen enthalten. Werden mehrere Linsen in axialer Richtung zur Erfüllung der optischen Funktion benötigt, so sind auch hier mehrere Linsenwafer in hoher Präzision (einige µm) übereinander zu stapeln.

Fig. 10d zeigt beispielhaft eine dieser Optiken auf Basis der "monolithic lens technology", wie sie u.a. von AJI genutzt wird. Probleme entstehen hier vor allem bei dem Übereinanderstapeln mehrerer Linsenwafer in hoher Präzision.

Die EP 0 543 202 A1 ein Verfahren zum Herstellen eines Druckkopfes.

Die US 2005/0030647 A1 zeigt die Herstellung eines Linsenstapels durch Übereinanderstapeln einzelner Linsen, wobei die Linsen so geformt sind, dass zwischen einzelnen Linsen Lufträume entstehen können.

Die EP 1 705 507 A1 zeigt einen Container, in den eine Linse eingelassen wird, wobei ein Abstand der Linse zu einem Bildsensor, der in dem Container angeordnet ist, einstellbar ist. Die US 2008/0143019 A1 zeigt die Herstellung einer Linse unter Verwendung von Formen mit einem Auflösungsschritt und die dadurch erhaltene optisches Bauteil oder Linse.

Basierend auf dem gezeigten Stand der Technik ist es eine Aufgabe der vorliegenden Erfindung, ein Konzept zu schaffen, welches eine kostengünstigere Herstellung von optischen Mikrostrukturen mit Lufträumen ermöglicht, oder eine Herstellung von optischen Mikrostrukturen mit Lufträumen mit kleinerer Bauhöhe ermöglicht.

Ein Verfahren gemäß Anspruch 1 und optische Bauteile nach den Ansprüchen 8 und 11 lösen diese Aufgabe.

Ein erster Aspekt der vorliegenden Erfindung basiert auf der Erkenntnis, dass eine Struktur, wie beispielsweise eine optische Mikrostruktur aus aushärtbarem Material mit Lufträumen kostengünstiger hergestellt werden kann, wenn in einem Schritt eines Verfahrens zur Herstellung der Struktur aus einem für ein Lösungsmittel löslichem aushärtbaren Material Strukturen abgeformt werden und in einem späteren Schritt, nach Abformung weiterer nicht löslicher aushärtbarer Materialen, durch Einbringung eines Lösungsmittels in einen Durchgangsbereich, welcher bei der Abformung der weiteren nicht löslichen Materialen frei geblieben ist und mit dem löslichen aushärtbaren Material fluidisch verbunden ist, das lösliche aushärtbare Material gelöst wird, so dass sich an der Stelle der Strukturen aus dem löslichen aushärtbaren Material Lufträume bilden.

Bei einem erfindungsgemäßen Verfahren wird eine erste Struktur aus einem ersten aushärtbarem Material auf einem Substrat abgeformt und ausgehärtet. Auf einer dem Substrat abgewandten ersten Oberfläche der ersten Struktur wird dann eine zweite Struktur aus einem zweiten aushärtbaren Material abgeformt und ausgehärtet, so dass sich an der ersten Oberfläche eine Grenzfläche zwischen der ersten Struktur und der zweiten Struktur ausbildet so, dass die erste Struktur von der zweiten Struktur an einem Durchgangsbereich nicht bedeckt ist. In den Durchgangsbereich wird dann ein Lösungsmittel eingebracht, um das erste aushärtbare Material der ersten Struktur zu lösen, so dass ein Leerraum zwischen der zweiten Struktur und der ersten Oberfläche des Substrates gebildet wird, wobei das erste aushärtbare Material nach Aushärtung löslich für das Lösungsmittel ist und das zweite aushärtbare Material nach Aushärtung unlöslich für das Lösungsmittel ist.

Ein Vorteil der vorliegenden Erfindung ist damit, dass durch das Herauslösen der ersten Struktur Leerräume oder Lufträume in einer optischen Mikrostruktur ohne Stapeln mehrerer Glassubstrate oder Polymerlinsenlagen wie dies bei der "monolithic lens technology" der Fall ist geschaffen werden können, was damit zu einer kostengünstigeren und auch Bauhöhe-reduzierten Herstellung mit einer hohen lateralen und axialen Präzision der optischen Mikrostruktur führt, da die ansonsten vorhandene Forderung nach mechanischer Stabilität der einzelnen, vor dem Fügen isoliert voneinander vorliegenden Schichten, entfällt.

Weiterhin kann bei einigen Ausführungsbeispielen der vorliegenden Erfindung das Substrat auf dem die Strukturen abgeformt und ausgehärtet wurden entfernt werden, dieses kann daher sehr dick sein im und mithin mechanisch stabil und insbesondere eine äußerst geringe Durchbiegung aufweisen.

Gemäß der vorliegenden Erfindung ist weiterhin eine dritte Struktur aus einem dritten aushärtbaren Material auf eine dem Substrat abgewandte erste Oberfläche der zweiten Struktur abgeformt und ausgehärtet werden, so dass sich an der ersten Oberfläche der zweiten Struktur eine Grenzfläche zwischen der zweiten Struktur und der dritten Struktur ausbildet und so, dass die zweite Struktur von der dritten Struktur an dem Durchgangsbereich nicht bedeckt ist und das dritte aushärtbare Material unlöslich für das Lösungsmittel ist. Das zweite aushärtbare Material und das dritte aushärtbare Material weisen nach dem Aushärten verschiedene Brechungsindices auf.

Ein weiterer Vorteil der vorliegenden Erfindung ist damit, dass Linsenstapel durch Übereinanderabformen mehrerer Strukturen aus aushärtbaren Materialien übereinander abgeformt werden können, ohne zusätzliche Substrate mit Durchgangslöchern, welche nur in hoher Präzision zu fertigen und zu fügen wären. Damit entfällt bei Ausführungsbeispielen der vorliegenden Erfindung ein kostenaufwendiges Übereinanderstapeln der einzelnen abgeformten Strukturen in hoher Präzision. Dies führt im Vergleich zu dem Stand der Technik zu einer erhöhten Kostenreduktion und einem Aufbau mit höherer Präzision.

Ein weiterer Aspekt der vorliegenden Erfindung ist, dass ein optisches Bauteil aus aushärtbarem Material bessere optische Eigenschaften aufweist, wenn an eine optisch relevante Oberfläche aus aushärtbarem Material des optischen Bauteils ein Hohlraum angrenzt.

Ein Vorteil der vorliegenden Erfindung ist damit, dass ein optisches Bauteil eine Grenzfläche zwischen einer optisch relevanten Oberfläche, welche beispielsweise eine Begrenzungsfläche für aushärtbares Material ist, und einen Luftraum aufweist. Ausführungsbeispiele können damit einen höheren Brechzahlsprung und damit eine höhere Brechkraft aufgrund eines Übergang von einem aushärtbaren Material zu Luft aufweisen, als dies bei optischen Bauteilen mit Übergängen von Glas zu Glas oder Glas zu aushärtbarem Material oder anderen Materialien der Fall ist.

Gemäß der vorliegenden Erfindung ist ein optisches Bauteil auch aus zwei aushärtbaren Materialien gebildet, wobei die zwei aushärtbaren Materialien unterschiedliche Brechungsindices aufweisen und wobei eine der optisch relevanten Oberfläche gegenüberliegende Grenzfläche zwischen den beiden ausgehärteten aushärtbaren Materialien als Achromat ausgebildet ist. Ein Vorteil der vorliegenden Erfindung ist damit, dass durch eine Grenzfläche zwischen zwei aushärtbaren Materialien verschiedene Brechungsindices Achromaten zur Vermeidung von chromatischen Aberrationen geschaffen werden können.

Ein weiterer Vorteil der vorliegenden Erfindung ist, dass ein optisches Bauteil gemäß einem Ausführungsbeispiel der vorliegenden Erfindung keine Glassubstrate zwischen Grenzflächen verschiedener aushärtbarer Materialien aufweist, und so mithin kostengünstiger gefertigt werden kann und eine geringe Bauhöhe als vergleichbare, aus dem Stand der Technik bekannte, optische Bauteile aufweist.

Ausführungsbeispiele der vorliegenden Erfindung können weiterhin an ihren Seiten strahlungsundurchlässiges, ausgehärtetes aushärtbares Material aufweisen, welches zur Unterdrückung von Falschlicht dient.

Weiterhin können bei Ausführungsbeispielen der vorliegenden Erfindung eine beliebige Anzahl von Strukturen aus aushärtbarem Material übereinander abgeformt und ausgehärtet werden, wobei die Strukturen, welche beispielsweise Linsen sein können, so dünn wie möglich gewählt werden können, aber eine beliebige Anzahl von übereinander angeordneten Linsen aufgrund des während der Herstellung verwendeten dicken temporären Substrates erstellt werden können.

Insbesondere können die übereinander zu Schichtstapeln abgeformten Strukturen, Hohlräume, zwischen einzelnen optisch relevanten Flächen der Schichtstapel aufweisen, welche fluidisch miteinander und nach außen verbunden sind.

Ausführungsbeispiele der vorliegenden Erfindung werden im Folgenden anhand der beiliegenden Figuren näher erläutert. Es zeigen:
- Fig. 1: ein Flussdiagramm eines Verfahrens zum Herstellen eines optischen Bauteils aus aushärtbaren Material gemäß einem Ausführungsbeispiel der vorliegenden Erfindung;
- Fig. 2a: eine schematische Darstellung des Schichtaufbaus eines optischen Bauteils gemäß einem Ausführungsbeispiel der vorliegenden Erfindung vor dem Herauslösen einzelner Schichten;
- Fig. 2b: eine schematische Darstellung des Schichtaufbaus des optischen Bauteils aus Fig. 2a nach dem Herauslösen einzelner Schichten;
- Fig. 3a: eine schematische Darstellung des Schichtaufbaus eines optischen Bauteils gemäß einem Ausführungsbeispiel der vorliegenden Erfindung vor dem Herauslösen einzelner Schichten;
- Fig. 3b: ein schematischer Schichtaufbau des optischen Bauteils aus Fig. 3a nach dem Herauslösen einzelner Schichten;
- Fig. 4a: eine schematische Darstellung des Schichtaufbaus eines optischen Bauteils gemäß einem Ausführungsbeispiel der vorliegenden Erfindung vor dem Herauslösen einzelner Schichten;
- Fig. 4b: eine schematische Darstellung des Schichtaufbaus des optischen Bauteils aus Fig. 4a nach dem Herauslösen einzelner Schichten;
- Fig. 5a: eine schematische Darstellung des Schichtaufbaus einer Anordnung zur Herstellung optischer Bauteile gemäß einem Ausführungsbeispiel der vorliegenden Erfindung vor dem Herauslösen einzelner Schichten unter Nutzung einer Abstandshalterstruktur;
- Fig. 5b: eine schematische Darstellung des Schichtaufbaus der Anordnung aus Fig. 5a nach dem Herauslösen einzelner Schichten;
- Fig. 6a: eine Draufsicht auf eine Anordnung optischer Bauteile gemäß einem Ausfuhrungsbeispiel der vorliegenden Erfindung mit einer integrierten Abstandshalterstruktur;
- Fig. 6b: eine Draufsicht auf eine Anordnung optischer Bauteile gemäß einem Ausführungsbeispiel der vorliegenden Erfindung ohne eine integrierte Abstandshalterstruktur;
- Fig. 7a: eine Draufsicht auf eine Anordnung optischer Bauteile gemäß einem Ausführungsbeispiel der vorliegenden Erfindung mit einer integrierten Abstandshalterstruktur;
- Fig. 7b: eine Draufsicht auf eine Anordnung optischer Bauteile gemäß einem Ausführungsbeispiel der vorliegenden Erfindung ohne eine integrierte Abstandshalterstruktur;
- Fig. 8a: eine schematische Darstellung des Schichtaufbaus eines optischen Bauteils gemäß einem Ausführungsbeispiel der vorliegenden Erfindung vor dem Herauslösen einzelner Schichten;
- Fig. 8b: eine schematische Darstellung des Schichtaufbaus des optischen Bauteils aus Fig. 8a nach dem Herauslösen einzelner Schichten;
- Fig. 9: eine Unteransicht und eine Schnittansicht eines Abformwerkzeuges sowie eine Draufsicht auf ein abgeformtes Element und eine Schnittansicht desselben;
- Fig. 10a: eine schematische Darstellung einer auf einem Substrat abgeformten Linse; und
- Fig. 10b bis 10d: eine schematische Darstellung von bereits bekannten Vorrichtungen zur optischen Abbildung.

Bevor im Folgenden die vorliegende Erfindung anhand der Zeichnungen näher erläutert wird, wird darauf hingewiesen, dass gleiche Elemente in den Figuren mit den gleichen oder ähnlichen Bezugszeichen versehen sind und dass eine wiederholte Beschreibung dieser Elemente weggelassen wird.

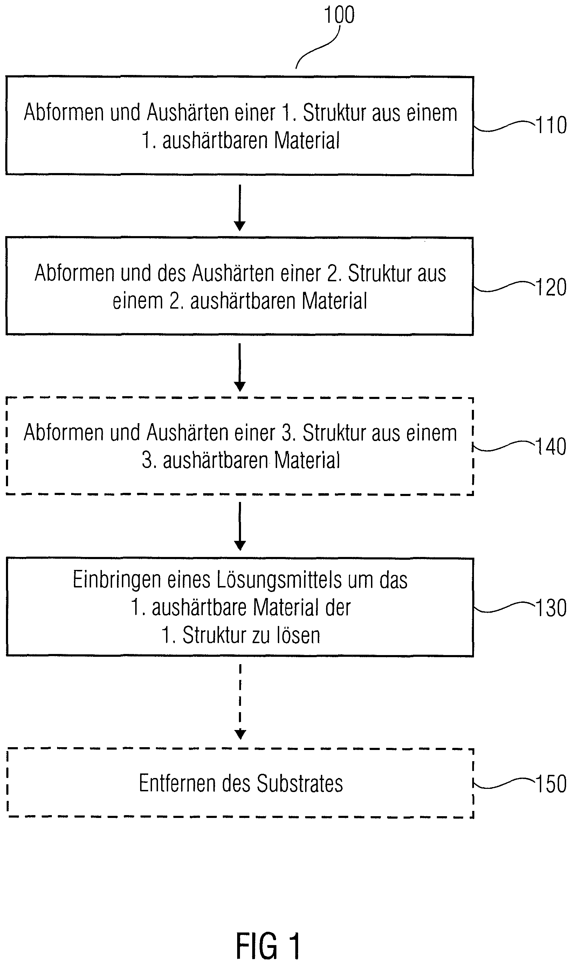

Fig. 1 zeigt ein Flussdiagramm eines Verfahrens 100 zum Herstellen eines optischen Bauteils aus aushärtbaren Material gemäß einem Ausführungsbeispiel der vorliegenden Erfindung.

Das Verfahren 100 umfasst einen ersten Schritt 110 des Abformens und Aushärtens einer ersten Struktur aus einem ersten aushärtbaren Material auf einem Substrat. Das Abformen und Aushärten kann hier ortsselektiv erfolgen, so dass ein erster Bereich einer Oberfläche des Substrates freiliegt.

Weiterhin umfasst das Verfahren 100 einen zweiten Schritt 120 des Abformens und des Aushärtens einer zweiten Struktur aus einem zweiten aushärtbaren Material auf einer dem Substrat abgewandeten ersten Oberfläche der ersten Struktur so, dass sich an der ersten Oberfläche eine Grenzfläche zwischen der ersten Struktur und der zweiten Struktur ausbildet und die erste Struktur von der zweiten Struktur an mindestens einem Durchgangsbereich nicht bedeckt ist.

Ferner umfasst das Verfahren 100 einen dritten Schritt 130 des Einbringens eines Lösungsmittels in den Durchgangsbereich, um dass erste aushärtbare Material der ersten Struktur zu lösen, so dass ein Leerraum zwischen der zweiten Struktur und der Oberfläche des Substrates gebildet wird, wobei das erste aushärtbare Material nach Aushärtung löslich für das Lösungsmittel ist und das zweite aushärtbare Material nach Aushärtung unlöslich für das Lösungsmittel ist.

Das Lösungsmittel kann beispielsweise in den Durchgangsbereich eingebracht werden, in dem die herzustellende Struktur, welche die erste Struktur aus dem ersten aushärtbaren Material und die zweite Struktur aus dem zweiten aushärtbaren Material aufweist, in ein Lösungsmittelbad eingetaucht wird. Das Lösungsmittel kann so durch den Durchgangsbereich an die erste Struktur dringen, um das erste aushärtbare Material der ersten Struktur zu lösen, so dass ein Freiraum an der Stelle gebildet wird, wo zuvor noch die erste Struktur war. Weiterhin kann das Lösungsmittel aber auch gezielt in den Durchgangsbereich eingebracht werden, beispielsweise durch gezieltes Injizieren.

Das herzustellende optische Bauteil könnte beispielsweise eine Linse oder eine optische Baugruppe mit einem Linsenstapel zur optischen Abbildung sein. Die aushärtbaren Materialien können beispielsweise UV-härtende Polymere sein.

Das Verfahren 100 umfasst weiterhin einen Schritt 140 des Abformens und Aushärtens einer dritten Struktur aus einem dritten aushärtbaren Material auf einer dem Substrat abgewandten ersten Oberfläche der zweiten Struktur. Dabei bildet sich an der ersten Oberfläche der zweiten Struktur eine Grenzfläche zwischen der zweiten Struktur und der dritten Struktur aus, wobei die erste Struktur von der dritten Struktur an dem Durchgangsbereich nicht bedeckt ist und wobei das dritte aushärtbare Material unlöslich für das Lösungsmittel ist. Das dritte aushärtbare Material kann hier beispielsweise verschieden zu dem zweiten aushärtbaren Material sein und einen anderen Brechungsindex aufweisen. Damit wird an der Grenzfläche zwischen der zweiten Struktur und der dritten Struktur z.B. ein Achromat zur Korrektur chromatischer Aberrationen ausgebildet.

Der Schritt 140 wird bevorzugt nach dem Schritt 120 und vor dem Schritt 130 ausgeführt. Weiterhin kann das Verfahren 100 einen Schritt 150 des Entfernens des Substrates aufweisen, welcher bevorzugt nach dem Schritt 130 ausgeführt wird.

Das Entfernen (150) des Substrates kann beispielsweise durch Sägen oder Fräsen durchgeführt werden.

Gemäß weiteren Ausführungsbeispielen kann der Schritt 150 des Entfernens des Substrats gleichzeitig mit dem Schritt 130 des Einbringens des Lösungsmittels erfolgen. Dies kann beispielsweise durch Eintauchen der herzustellenden Struktur in ein Lösungsmittelbad geschehen, in dem sowohl das erste aushärtbare Material der ersten Struktur gelöst wird, als auch das Substrat von der herzustellenden Struktur entfernt wird. Das Substrat kann dazu, beispielsweise ganzflächig oder teilweise auf seiner Oberfläche, durch das Lösungsmittel lösliches aushärtbares Material, beispielsweise erstes aushärtbares Material aufweisen oder aus löslichem aushärtbaren Material zumindest teilweise gebildet sein. Das erste aushärtbare Material, kann beispielsweise zwischen der Oberfläche des Substrates und der zweiten Struktur als Verbindungsmaterial angeordnet sein, so dass beim Eintauchen in das Lösungsmittelbad das Verbindungsmaterial gelöst wird und eine an das Verbindungsmaterial angrenzende Oberfläche der zweiten Struktur nach dem Ablösen des Substrates, eine Hauptseite der herzustellenden Struktur bildet.

Gemäß weiteren Ausführungsbeispielen kann vor dem Schritt 110 des Abformens und Aushärtens der ersten Struktur eine Abstandshalterstruktur auf dem Substrat angeordnet (beispielsweise abgeformt) werden. Der Schritt 110 des Abformens und Aushärtens der ersten Struktur und der Schritt 120 des Abformens und Aushärtens der zweiten Struktur erfolgen dann in Löchern der aufgebrachten Abstandshalterstruktur. Weiterhin ist es auch möglich, dass zwischen dem Substrat und der Abstandshalterstruktur und der zweiten Struktur (wie oben bereits beschrieben) lösliches aushärtbares Material angeordnet ist, um in dem Schritt 150 des Entfernens des Substrates gleichzeitig mit dem Lösen der ersten Struktur die herzustellende Struktur und damit auch die Abstandshalterstruktur von dem Substrat zu lösen. Die Abstandshalterstruktur bildet dann nach dem Entfernen vom Substrat umlaufende Seitenwände der herzustellenden Struktur.

Gemäß weiteren Ausführungsbeispielen der Erfindung ist es auch möglich, dass eine beliebige Anzahl von Strukturen aus aushärtbarem Material übereinander abgeformt und ausgehärtet werden, wobei bevorzugt ein oder mehrere Durchgangsbereiche zum Einbringen des Lösungsmittels, zum Lösen der Strukturen aus dem ersten aushärtbaren Material, freigehalten werden. Die Durchgangsbereiche können beispielsweise, durch selektives Bestrahlen beim Aushärten der aushärtbaren Materialien geschaffen werden, d.h. es werden nur die Bereiche eines aushärtbaren Materials bestrahlt, welche im späteren optischen Bauteil vorhanden sein sollen. Nicht bestrahlte Bereiche aushärtbaren Materials können nach dem selektiven Aushärten entfernt werden. Ein Durchgangsbereich eines Schichtstapels aus übereinander abgeformten Strukturen kann dann so ausgebildet sein, das er alle Strukturen aus dem ersten aushärtbaren Material des Schichtstapels fluidisch miteinander und mit außerhalb bzw. der Außenwelt bzw. nach außen verbindet.

Weitere Ausführungsbeispiele können ferner einen Schritt des Abformens und Aushärtens von weiterem aushärtbaren Material umfassen, wobei das weitere aushärtbare Material zumindest nach dem Aushärten strahlungsundurchlässig für einen Nutzwellenlängenbereich der herzustellenden Struktur ist. Das weitere aushärtbare Material kann beispielsweise ein schwarzes Polymer sein, welcher an einer Nichthauptseite der herzustellenden Struktur nach Aushärtung eine Umrandung der herzustellenden Struktur bildet.

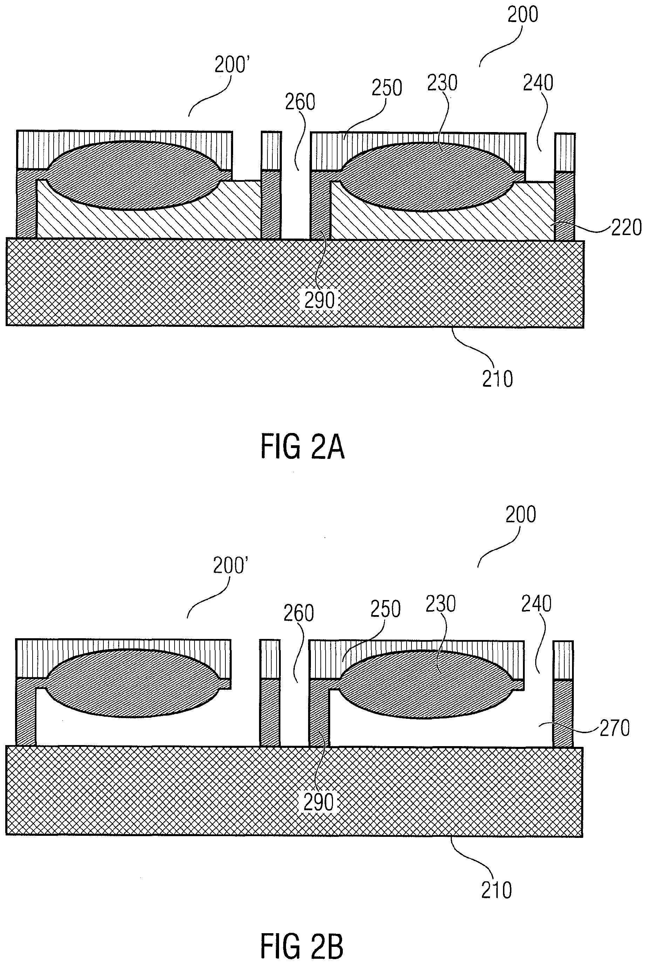

Es sei erwähnt, dass in den folgenden Fig. 2a bis 8b jeweils mindestens zwei optische Bauteile dargestellt sind. Dies soll verdeutlichen, dass eine Herstellung der optischen Bauteile im Nutzen, d.h. in Feldern bevorzugt ist. Es sei vor allem erwähnt, dass die Abformung der einzelnen, in den Fig. 2a bis 8b gezeigten optischen Bauteile auf einem gemeinsamen Substratwafer erfolgt. Der Substratwafer kann in einem späteren Schritt 150 auch wieder entfernt werden. Obwohl die in den folgenden Fig. 2a-8b jeweils dargestellten optischen Bauteile identisch sind, so können sich diese, gemäß weiteren Ausführungsbeispielen in ihrem Aufbau voneinander unterscheiden. Mit anderen Worten gesagt, können auf einem gemeinsamen Substratwafer abgeformte optische Bauteile sich in ihren Parametern, wie beispielsweise Profilverlauf, Dicke, Berandung und Abstand zu Nachbarn voneinander unterscheiden. Dies kann beispielsweise durch ein ortselektives Abformen und Aushärten der einzelnen herzustellenden Strukturen also der einzelnen optischen Bauteile erfolgen.

Fig. 2a zeigt eine schematische Darstellung des Schichtaufbaus einer Anordnung zur Herstellung optischer Bauteile 200, 200' gemäß einem Ausführungsbeispiel der vorliegenden Erfindung vor dem Herauslösen einzelner Schichten. Die in Fig. 2a gezeigten optischen Bauteile 200 und 200' können beispielsweise mit einem Verfahren 100, wie es in Fig. 1 beschrieben wurde, hergestellt sein, wobei der Schritt 130 des Einbringens eines Lösungsmittels noch nicht ausgeführt wurde. Die optischen Bauteile 200, 200' weisen ein gemeinsames Substrat 210 auf und sind in ihrem Aufbau identisch, daher wird im Folgenden nur der Aufbau des optischen Bauteils 200 stellvertretend für den Aufbau des optischen Bauteils 200' beschrieben.

Gemäß weiteren Ausführungsbeispielen können sich die optischen Bauteile 200, 200' sowohl in ihrer Form als auch in ihrer Schichtfolge voneinander unterscheiden, beispielsweise wenn ein ortselektives Abformen und Aushärten erfolgt.

Auf einer Oberfläche des Substrates 210 ist eine erste Struktur 220 ortsselektiv abgeformt und ausgehärtet worden. Umlaufend die auf der Oberfläche des Substrates 210 angeordnete erste Struktur 220, ist eine zweite Struktur 230 aus einem zweiten aushärtbaren Material angeordnet. Die zweite Struktur 230 umschließt zusammen mit der Oberfläche des Substrates 210 die erste Struktur 220, bis auf einen oder mehrere Durchgänge 240 vollständig. Die zweite Struktur 230 ist über einen Randbereich 290 aus dem zweiten aushärtbaren Material mit dem Substrat 210 verbunden.

Auf einer der ersten Struktur 220 abgewandten Oberfläche der zweiten Struktur 230 kann eine dritte Struktur 250 aus einem dritten aushärtbaren Material angeordnet sein.

Die zweite Struktur 230 kann beispielsweise als eine Sammellinse mit einer konkaven Wölbung ausgebildet sein. Die dritte Struktur 250 kann beispielsweise als eine plankonvexe Streulinse ausgebildet sein. Das zweite aushärtbare Material und das dritte aushärtbare Material können sich beispielsweise in ihren Brechzahlen unterscheiden, um damit einen Achromaten zur Unterdrückung von chromatischen Aberrationen zu bilden. Zwischen den beiden optischen Bauteilen 200, 200' kann ein Freiraum 260 ausgebildet sein.

Weiterhin können die Oberflächen der zweiten Struktur 230 und der dritten Struktur 250, andere beliebige Formen, wie beispielsweise konkav, konvex, plan oder freiformartig und weitere aufweisen.

Fig. 2b zeigt eine schematische Darstellung des Schichtaufbaus der Anordnung aus Fig. 2a nach dem Herauslösen einzelner Schichten, also nach dem Herauslösen der ersten Struktur 220 aus dem ersten aushärtbaren Material. Das Herauslösen der Struktur 220 aus dem ersten aushärtbaren Material kann beispielsweise durch einen Schritt 130, wie er in dem in Fig. 1 beschriebenen Verfahren 100 beschrieben wurde, erfolgt sein. An der Position der ursprünglichen ersten Struktur 220 ist nun ein Luftraum 270 angeordnet. Eine Grenzfläche zwischen der zweiten Struktur 230 und dem gebildeten Luftraum 270 weist damit einen hohen Brechzahlsprung im Vergleich zu Grenzflächen zwischen zwei verschiedenen aushärtbaren Materialien oder auch zwischen einem aushärtbaren Material und Glas auf. Ausführungsbeispiele können damit bessere Brecheigenschaften im Vergleich zu einer auf einem Glassubstrat abgeformten Linse aus aushärtbarem Material aufweisen.

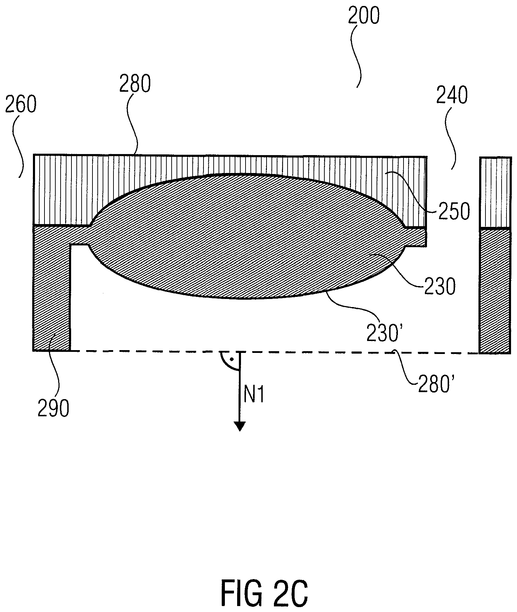

Fig. 2c zeigt eine schematische Darstellung des Schichtaufbaus des optischen Bauteils 200 aus der Anordnung aus Fig. 2b gemäß einem Ausführungsbeispiel der vorliegenden Erfindung. Das optische Bauteil 200 weist kein Substrat 210 mehr auf. Das Entfernen des Substrates 210 kann beispielsweise durch einen Schritt 150, wie er in dem Verfahren 100 gemäß Fig. 1 beschrieben wurde, erfolgt sein. Das optische Bauteil 200 weist eine erste Hauptseite 280 und eine zweite Hauptseite 280', die der ersten Hauptseite 280 abgewandt ist, auf.

Weiterhin weist das optische Bauteil 200 den Randbereich 290 und den Durchgang 240 auf, wobei der Randbereich 290 zwischen der zweiten Hauptseite 280' und einem Rand einer optisch relevanten Oberfläche 230' angeordnet ist, um die optisch relevante Oberfläche 230' in Normalenrichtung N1 von der zweiten Hauptseite 280' zu beabstanden, und wobei der Durchgang 240 lateral versetzt zu der optisch relevanten Oberfläche 230' eine fluidische Verbindung von der ersten Hauptseite 280 des optischen Bauteils 200 zu der zweiten Hauptseite 280 herstellt.

Die optisch relevante Oberfläche 230' kann beispielsweise als eine konkave, eine konvexe, eine plane, oder eine freiformartige Oberfläche, beispielsweise eine Linsenoberfläche ausgebildet sein.

Obwohl das in Fig. 2c gezeigte optische Bauteil 200 eine dritte Struktur 250 aus einem dritten aushärtbaren Material aufweist, so kann bei weiteren Ausführungsbeispielen diese dritte Struktur 250 nicht vorhanden sein oder aus dem selben aushärtbaren Material wie die zweite Struktur 230 gebildet sein.

Obwohl in dem in Fig. 2c gezeigten konkreten Ausführungsbeispiel das Substrat 210 vollständig entfernt wurde, so sind auch Ausführungsbeispiele verwendbar, bei denen das Substrat 210 teilweise entfernt wird oder gar nicht entfernt wird. Das Entfernen des Substrates 210, beispielsweise in einem Schritt 150 des Verfahrens 100 kann beispielsweise durch Sägen oder Fräsen durchgeführt werden.

Gemäß weiteren Ausführungsbeispielen kann der Schritt 150 des Entfernens des Substrats gleichzeitig mit dem Schritt 130 des Einbringens des Lösungsmittels erfolgen. Dies kann beispielsweise durch Eintauchen der Anordnung aus Fig. 2b in ein Lösungsmittelbad geschehen, in dem sowohl das erste aushärtbare Material der ersten Struktur 220 gelöst wird, als auch das Substrat 210 von den optischen Bauteilen 200, 200' entfernt wird. Das Substrat 210 kann dazu, beispielsweise ganzflächig auf einer den optischen Bauteilen 200, 200' zugewandten Oberfläche, durch das Lösungsmittel lösliches aushärtbares Material, beispielsweise erstes aushärtbares Material aufweisen oder aus löslichem aushärtbaren Material zumindest teilweise gebildet sein.

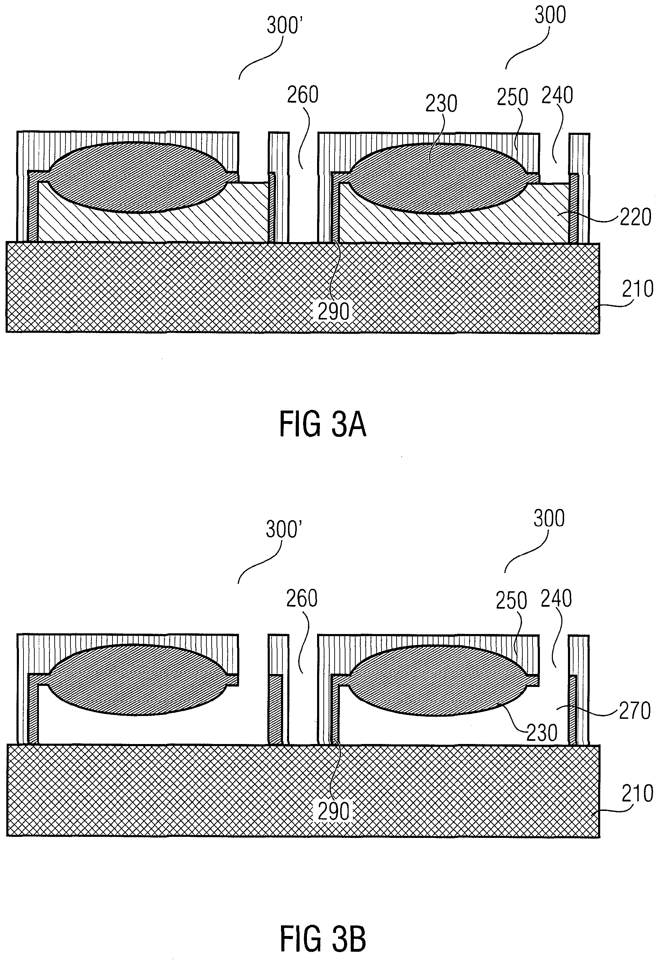

Fig. 3a zeigt eine schematische Darstellung des Schichtaufbaus einer Anordnung zur Herstellung optischer Bauteile 300, 300' gemäß einem Ausfuhrungsbeispiel der vorliegenden Erfindung vor dem Herauslösen einzelner Schichten. Die in Fig. 3a gezeigten optischen Bauteile 300, 300' unterscheiden sich von denen in Fig. 2a gezeigten optischen Bauteilen 200, 200' dadurch, dass die dritte Struktur 250 aus dem dritten aushärtbaren Material die zweite Struktur 230 aus dem zweiten aushärtbaren Material vollständig, bis auf den Durchgang 240 umschließt, während bei den in Fig. 2a gezeigten optischen Bauteilen 200, 200' die dritte Struktur 250 aus dem dritten aushärtbaren Material nur auf einer dem Substrat 210 abgewandeten Oberfläche der zweiten Struktur 230 angeordnet ist und diese nicht vollständig umschließt.

Fig. 3b zeigt analog zu Fig. 2b eine schematische Darstellung des Schichtaufbaus der Anordnung aus Fig. 3a nach dem Herauslösen einzelner Schichten bzw. nach dem Herauslösen der ersten Struktur 220 aus dem ersten aushärtbaren Material. Das Herauslösen der Struktur 220 aus dem ersten aushärtbaren Material kann beispielsweise durch einen Schritt 130, wie er in dem in Fig. 1 beschriebenen Verfahren 100 beschrieben wurde, erfolgt sein. An der Position der ursprünglichen ersten Struktur 220 ist nun ein Luftraum 270 angeordnet.

Ferner kann bei weiteren Ausführungsbeispielen der Erfindung das Substrat 210 der optischen Bauteile 300, 300' entfernt werden, beispielsweise in einem Schritt 150 des Verfahrens 100 oder auch verkleinert werden.

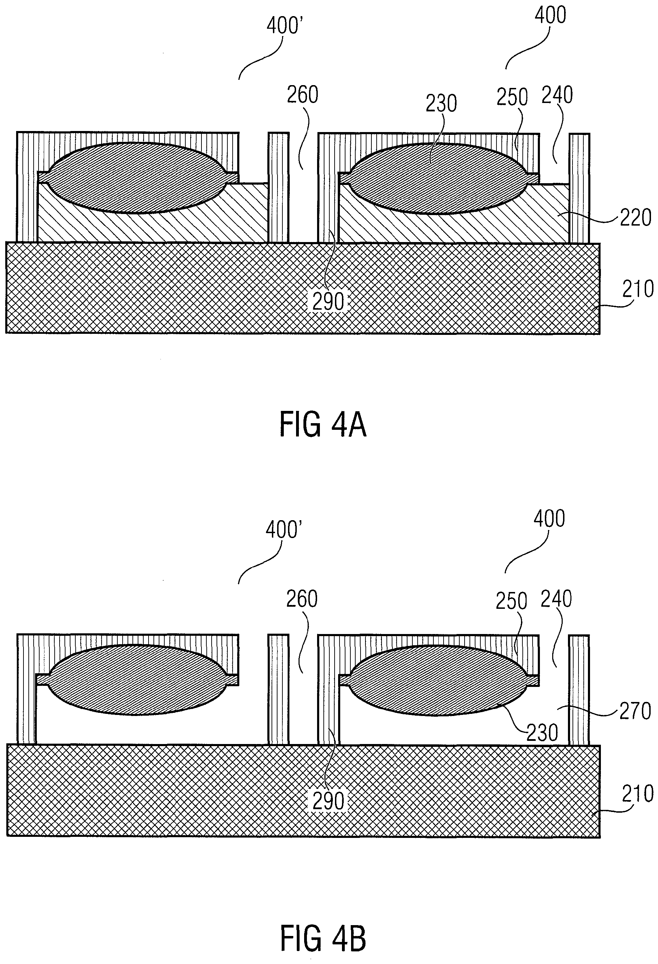

Fig. 4a zeigt eine schematische Darstellung des Schichtaufbaus einer Anordnung zur Herstellung optischer Bauteile 400, 400' gemäß einem Ausführungsbeispiel der vorliegenden Erfindung vor dem Herauslösen einzelner Schichten. Die in Fig. 4a gezeigten optischen Bauteile 400, 400' unterscheiden sich durch die in den Fig. 2a und 3a gezeigten optischen Bauteile 200, 200', 300, 300' dadurch, dass die zweite Struktur 230 aus dem zweiten aushärtbaren Material lediglich auf einer dem Substrat 210 abgewandten Oberfläche der ersten Struktur 220 aus dem ersten aushärtbaren Material angeordnet ist. Die zweite Struktur 230 umschließt dabei die erste Struktur 220 nicht an ihren Seitenrändern, wie dies in den vorherig gezeigten konkreten Ausführungsbeispielen der Fall war. Der Randbereich 290, der das Substrat 210 mit der zweiten Struktur 230 verbindet ist damit im Gegensatz zu den vorherigen Ausführungsbeispielen aus dem dritten aushärtbaren Material und nicht aus dem zweiten aushärtbaren Material gebildet.

Fig. 4b zeigt analog zu den Fig. 2b und 3b eine schematische Darstellung des Schichtaufbaus der Anordnung aus Fig. 4a nach dem Herauslösen einzelner Schichten bzw. nach dem Herauslösen der ersten Struktur 220 aus dem ersten aushärtbaren Material.

Das Herauslösen der Struktur 220 aus dem ersten aushärtbaren Material kann beispielsweise durch einen Schritt 130, wie er in dem in Fig. 1 beschriebenen Verfahren 100 beschrieben wurde, erfolgt sein. An der Position der ursprünglichen ersten Struktur 220 ist nun ein Luftraum 270 angeordnet.

Ferner kann bei weiteren Ausführungsbeispielen der Erfindung das Substrat 210 der optischen Bauteile 400, 400' entfernt werden, beispielsweise in einem Schritt 150 des Verfahrens 100 oder auch verkleinert werden.

Im Gegensatz zu den in Fig. 2b und Fig. 3b gezeigten optischen Bauteilen 200, 200', 300, 300' ist in dem hier gezeigten konkreten Ausführungsbeispiel ein Weglassen der dritten Struktur 250 aus dem dritten aushärtbaren Material nicht möglich, da der Randbereich 290 auch aus dem dritten aushärtbaren Material gebildet ist.

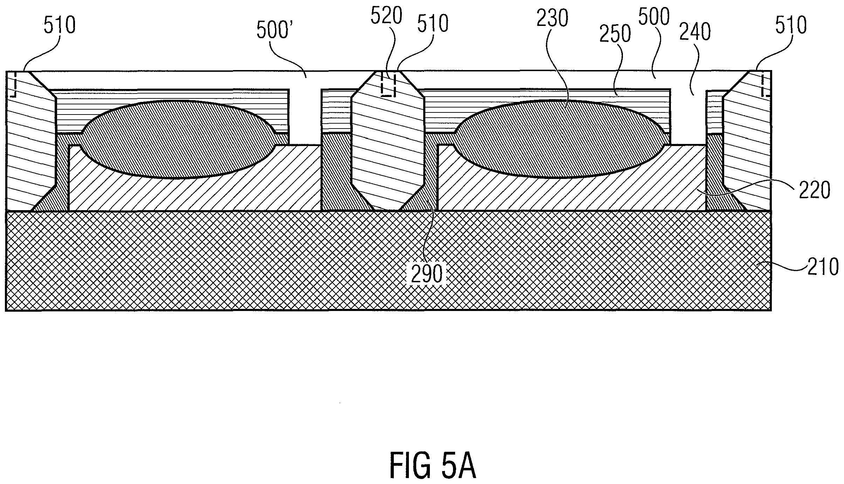

Fig. 5a zeigt eine schematische Darstellung des Schichtaufbaus einer Anordnung zur Herstellung optischer Bauteile 500, 500' gemäß einem Ausführungsbeispiel der vorliegenden Erfindung vor dem Herauslösen einzelner Schichten unter Nutzung einer Abstandshalterstruktur (sogenannter "Spacerwafer"). Die in Fig. 5a gezeigte Anordnung zweier optischer Bauteile 500, 500' unterscheidet sich von der in Fig. 2a gezeigten Anordnung optischer Bauteile 200, 200' dadurch, dass in dem Freiraum 260 zwischen den optischen Bauteilen 500, 500' Abstandshalterstrukturen 510 aus weiterem, aushärtbaren Material angeordnet sind.

Das weitere aushärtbare Material kann, im Gegensatz zu dem zweiten aushärtbaren Material und dem dritten aushärtbaren Material nach dem Aushärten nicht transparent sein.

Weiterhin weisen die Abstandshalterstrukturen 510 vorliegend exemplarisch an einer dem Substrat 210 abgewandten Oberfläche jeweils eine Nut 520 zur Aufnahme einer Feder auf. Weiterhin können die Abstandshaltstrukturen 510 gegenüberliegend der Nut 520, beispielsweise an einer dem Substrat 210 zugewandten Oberfläche eine weitere Nut aufweisen. Ferner ist es möglich, dass die Abstandshalterstrukturen 510 Federn zur Einbringung derselben in eine Nut aufweisen, welche beispielsweise anstatt der Nute oder zusätzlich auf den Oberflächen der Abstandshalterstrukturen 510 angeordnet sein können. Beispielsweise könnte eine Abstandshalterstruktur 510 an einer ersten Oberfläche eine Feder aufweisen und an einer gegenüberliegenden zweiten Oberfläche eine Nut aufweisen.

Die Nute oder Federn können beispielsweise umlaufend um die optischen Bauteile 500, 500' in den Oberflächen der Abstandshalterstrukturen 510 integriert sein, oder auch peripher das heißt, nur in bestimmten Bereichen der Oberflächen der Abstandshalterstrukturen 510 ausgebildet sein.

Die Abstandshalterstrukturen 510 aus dem nicht transparenten weiteren aushärtbaren Material dienen der Unterdrückung von Falschlicht, welches anderenfalls über den Rand der optischen Bauteile 500, 500' einfallen würde und damit den Kontrast bzw. die Bildqualität einer optischen Abbildungsvorrichtung, in der die optischen Bauteile 500, 500' verwendet werden, senken würde. Ein aufwendiges Schwärzen der Seitenwände, wie es bei bekannten optischen Mikrostrukturen durchgeführt wird, entfällt hiermit.

Die Nute oder Federn 520 in den Abstandshalterstrukturen 510 können der Befestigung der optischen Bauteile 500, 500' beispielsweise auf einem Bildsensor oder zu anderen optischen Komponenten wie z.B. Linsen dienen. Hierdurch entfällt eine aufwendige Justagevorrichtung, wie sie bei Stapeln von Wafern mit Linsenfeldern benötigt wird.

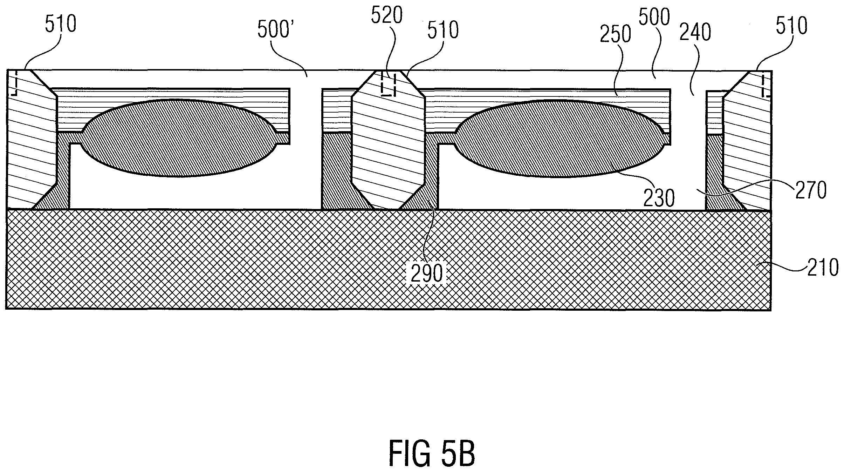

Fig. 5b zeigt analog zu den Fig. 2b, 3b und 4b eine schematische Darstellung des Schichtaufbaus der Anordnung aus Fig. 5a nach dem Herauslösen einzelner Schichten bzw. der ersten Struktur 220 aus dem ersten aushärtbaren Material.

Das Herauslösen der Struktur 220 aus dem ersten aushärtbaren Material kann beispielsweise durch einen Schritt 130, wie er in dem in Fig. 1 beschriebenen Verfahren 100 beschrieben wurde, erfolgt sein. An der Position der ursprünglichen ersten Struktur 220 ist nun ein Luftraum 270 angeordnet.

Ferner kann bei weiteren Ausführungsbeispielen der Erfindung das Substrat 210 der optischen Bauteile 500, 500' entfernt werden, beispielsweise in einem Schritt 150 des Verfahrens 100 oder auch verkleinert werden.

Die Abstandshalterstrukturen 510 können beispielsweise als ein "Spacerwafer" auf dem Substrat 210 angeordnet werden, dieser "Spacerwafer" kann beispielsweise aus nicht transparentem schwarzem Material gebildet sein und Löcher für die abzuformenden Bauteile und eventuell Perforationen zum vereinfachten Trennen vom Substrat 210 aufweisen. Die Abstandshalterstrukturen 510 bilden dann umlaufende Wände um die Löcher des "Spacerwafers". Die Abformung der einzelnen optischen Bauteile (beispielsweise der optischen Bauteile 510, 510') kann dann in den einzelnen Löchern des "Spacerwafers" erfolgen. Weiterhin ist es aber auch möglich, dass kein "Spacerwafer" auf dem Substrat angeordnet wird um die Abstandshalterstrukturen 510 zu bilden, beispielsweise wenn die Abformung der optischen Bauteile (beispielsweise der optischen Bauteile 510, 510') in räumlich separierten Modulen erfolgt (beispielsweise durch selektives Bestrahlen und Aushärten), so dass nach dem Abformen zwischen den optischen Bauteilen Freiräume (beispielsweise vergleichbar dem in Fig.2a gezeigten Freiraum 260) frei bleiben. In diese frei gebliebenen Freiräume zwischen den Modulen kann schwarzes Polymer gegossen werden und dort aushärten um die Abstandshalterstrukturen ("Spacerstrukturen") 510 zu bilden. Das schwarze Polymer kann dabei beispielsweise thermisch aushärtbar oder UV-aushärtbar sein.

Das Substrat 210 bzw. der temporäre Wafer 210 kann beispielsweise anschließend durch ein Lösungsmittelbad von den abgeformten optischen Bauteilen getrennt werden, beispielsweise in einem Schritt 150, gemäß dem Verfahren 100. Die abgeformten optischen Bauteile sind dann in die Abstandshalterstrukturen 510 eingebettet, das heißt, die Abstandshalterstrukturen 510 bilden umlaufende Seitenwände der abgeformten optischen Bauteile.

Die in den Abstandshalterstrukturen 510 eingebetteten optischen Bauteile bilden damit einen optischen Bauteilwafer und können nach dem Lösen des Substrats 210 durch Sägen, durch die Abstandshalterstrukturen 510 getrennt werden. Weiterhin ist es aber auch möglich, dass der optische Bauteilwafer auf einen Wafer mit einer Vielzahl von Bildsensoren angeordnet wird und anschließend der Bauteilwafer zusammen mit dem Bildsensorenwafer gesägt wird (Wafer-Level-Assemblierung). Weiterhin ist es auch möglich, dass einem Bildsensor eine Vielzahl von optischen Bauteilen (beispielsweise 5x5 optische Bauteile) zugeordnet wird. Ein optisches Bauteil kann dann beispielsweise einen optischen Kanal des Bildsensors bilden. Die einzelnen optischen Bauteile können sich dabei voneinander unterscheiden.

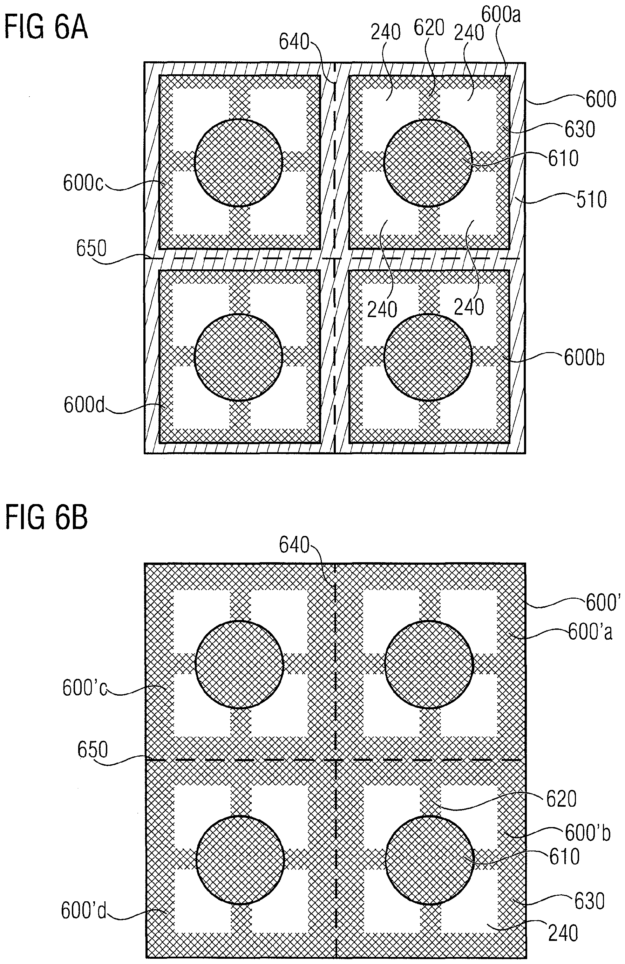

Fig. 6a zeigt eine Draufsicht auf eine Anordnung optischer Bauteile 600a-600d gemäß einem Ausführungsbeispiel der vorliegenden Erfindung mit einer integrierten Abstandshalterstruktur 510. Die in Fig. 6a gezeigten optischen Bauteile 600a-600d weisen jeweils eine optisch wirksame Fläche 610, beispielsweise eine Linsenoberfläche auf. Weiterhin weisen die optischen Bauteile 600a-600d einen Durchgangsbereich 240 zum Einbringen des Lösungsmittels auf, um beispielsweise eine erste Struktur 220 aus dem ersten aushärtbaren Material, wie sie in Fig.2b gezeigt ist herauszulösen. Weiterhin umfassen die optischen Bauteile 600a-600d einen Steg 620 zwischen der optisch wirksamen Fläche 610 und einer Peripherie 630 der jeweiligen Schicht außerhalb der optisch wirksamen Fläche 610. Die Abstandshalterstruktur 510 bildet jeweils eine Umrandung der einzelnen optischen Bauteile 600a-600d. Die einzelnen optischen Bauteile 600a-600d der Anordnung 600 können in einem weiteren Schritt voneinander getrennt werden, beispielsweise durch Sägen entlang der gestrichelten Linien 640 und 650. Jedes der optischen Bauteile 600a-600d weist dann eine umlaufende Abstandshalterstruktur 510 auf. Ein nachträgliches Schwärzen der Seitenwände der optischen Bauteile 600a-600d ist dann nicht mehr nötig.

Fig. 6b zeigt eine Draufsicht auf eine Anordnung optischer Bauteile 600'a-600'd gemäß einem Ausführungsbeispiel der vorliegenden Erfindung ohne eine integrierte Abstandshalterstruktur 510. Die in Fig. 6b gezeigte Anordnung 600' unterscheidet sich durch die in Fig. 6a gezeigte Anordnung 600 dadurch, dass keine Abstandshalterstruktur 510 zwischen den einzelnen optischen Bauteilen 600'a-600'd angeordnet ist. Auch hier können die einzelnen optischen Bauteile 600'a-600'd, beispielsweise durch Sägen entlang der gestrichelten Linien 640 und 650 voneinander getrennt werden. Zur Unterdrückung von Falschlicht können die Außenwände, also die Seiten der Peripherie 630 der einzelnen optischen Bauteile 600'a-600'd geschwärzt werden.

Gemäß weiteren Ausführungsbeispielen, kann bei optischen Bauteilen mit einer Mehrzahl übereinander abgeformter Schichten, in einzelnen Schichtlagen auf einen Steg 620 zur Verbindung der optisch aktiven Fläche 610 mit der Peripherie 630 verzichtet werden, wenn in mindestens einer anderen Schicht des Schichtstapels, mindestens ein solcher Steg 620 existiert, welcher die optisch aktive Fläche 610 mit der Peripherie 630 verbindet.

Weiterhin ist es möglich, dass der Steg 620 zwischen der optisch aktiven Fläche 610 und der Peripherie 630 eine durchgehende Verbindung bildet, und diese Verbindung nur an einer oder mehreren Stellen unterbrochen ist, um den Durchgang 240 zu bilden.

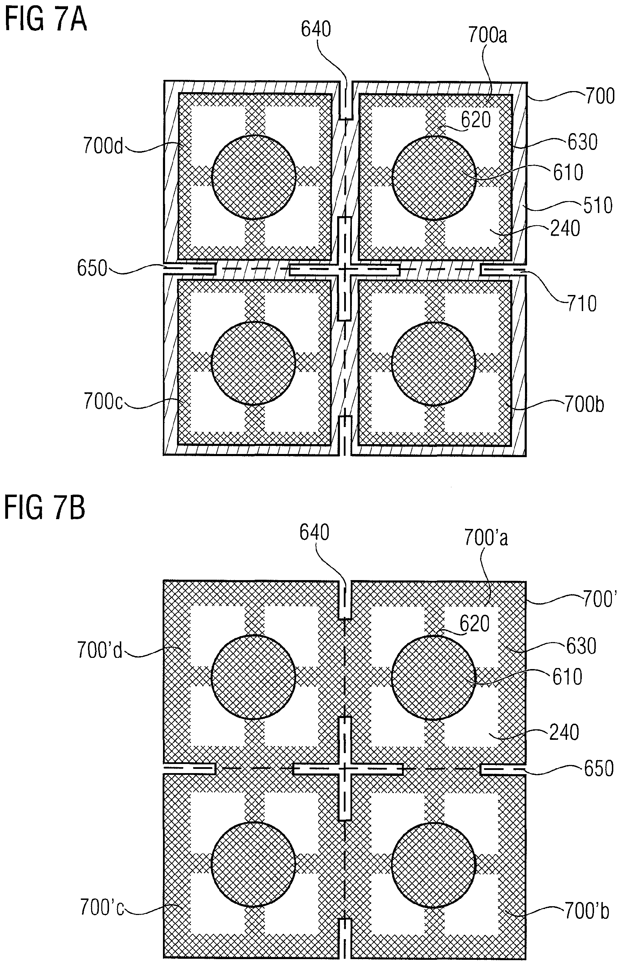

Fig. 7a zeigt eine Draufsicht auf eine Anordnung optischer Bauteile 700a-700d gemäß einem Ausführungsbeispiel der vorliegenden Erfindung mit einer integrierten Abstandshalterstruktur 510. Die vier optischen Bauteile 700a-700d der Anordnung 700 weisen analog zu den optischen Bauteilen 600a-600d der in Fig. 6a gezeigten Anordnung 600 eine optisch aktive Fläche 610, beispielsweise eine Linsenoberfläche, einen oder mehrere Stege 620, eine Peripherie 630, einen oder mehrere Durchgangsbereiche 240 und eine Abstandshalterstruktur 510 auf. Im Gegensatz zu der in Fig. 6a gezeigten Anordnung 600 weist die umlaufende Abstandshalterstruktur 510 Perforationen 710 auf. Die einzelnen optischen Bauteile 700a-700d der Anordnung 700 können in einem weiteren Schritt voneinander getrennt werden, beispielsweise durch Sägen entlang der gestrichelten Linien 640 und 650, insbesondere können die Perforationen 710 zu einem einfacheren Sägen dienen, da weniger Material durch Sägen entfernt werden muss. Weiterhin kann eine Trennung der einzelnen Module bzw. der einzelnen optischen Bauteile 700a-700d durch Brechen entlang der durch die Perforationen 710 gebildeten Sollbruchlinien erfolgen, was die Kosten für den Trennprozess reduziert. Jedes der optischen Bauteile 700a-700d weist dann eine umlaufende Abstandshalterstruktur 510 auf.
Es sei hier nochmals erwähnt, dass diese Abstandshalterstruktur 510 vorzugsweise aus nicht transparentem, beispielsweise schwarzem aushärtbarem Material gebildet ist, um Falschlicht zu unterdrücken. Ein nachträgliches Schwärzen der Seitenwände der optischen Bauteile 700a-700d ist dann nicht mehr nötig.

Fig. 7b zeigt eine Draufsicht auf eine Anordnung optischer Bauteile 700'a-700'd gemäß einem Ausführungsbeispiel der vorliegenden Erfindung ohne eine integrierte Abstandshalterstruktur 510. Die in Fig. 7b gezeigte Anordnung 700' unterscheidet sich durch die in Fig. 7a gezeigte Anordnung 700 dadurch, dass keine Abstandshalterstruktur 510 zwischen den einzelnen optischen Bauteilen 700'a-700'd angeordnet ist. Auch hier können die einzelnen optischen Bauteile 700'a-700'd, beispielsweise durch Sägen entlang der gestrichelten Linien 640 und 650 voneinander getrennt werden. Zur Unterdrückung von Falschlicht können die Außenwände, also die Seiten der Peripherie 630 der einzelnen optischen Bauteile 700'a-700'd geschwärzt werden.

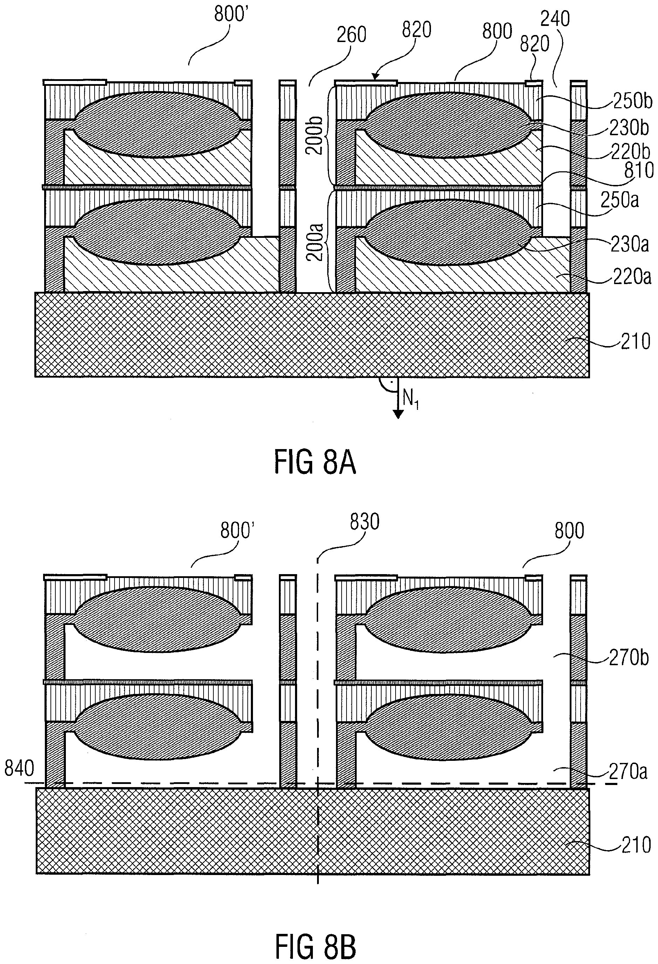

Fig. 8a zeigt eine schematische Darstellung des Schichtaufbaus einer Anordnung zur Herstellung optischer Bauteile 800, 800' gemäß einem Ausführungsbeispiel der vorliegenden Erfindung vor dem Herauslösen einzelner Schichten bzw. der ersten Struktur 220. Jedes der in Fig. 8a gezeigten optischen Bauteile 800, 800' weist einen in Normalenrichtung angeordneten Schichtstapel aus zwei optischen Bauteilen 200, wie sie in Fig. 2a beschrieben wurden, auf. Die optischen Bauteile 800, 800' weisen ein gemeinsames Substrat 210 auf, und zwischen den beiden optischen Bauteilen 800, 800' ist ein Freiraum 260 gebildet. Die beiden optischen Bauteile 800, 800' sind in ihrem Aufbau vorliegend exemplarisch identisch, daher wird im Folgenden nur der Aufbau des optischen Bauteils 800 stellvertretend für den Aufbau des optischen Bauteils 800' beschrieben. Es sei aber darauf hingewiesen, dass es auch möglich ist, dass die optischen Bauteile 800, 800' nicht identisch sind und voneinander abweichen, insbesondere in Form und/oder Schichtfolge. Ein erstes optisches Bauteil 200a des Schichtstapels des optischen Bauteils 800 ist auf dem Substrat 210 angeordnet. Auf einer dem Substrat 210 abgewandten Oberfläche der dritten Struktur 250a des ersten optischen Bauteils 200a ist eine Schicht 810, beispielsweise eine dielektrische Schicht 810, welche auch als ein Schichtstapel aus mehreren Einzelschichtlagen ausgebildet sein kann, angeordnet. Die dielektrische Schicht 810 ist bevorzugt transparent. Ein zweites optisches Bauteils 200b des Schichtstapels des optischen Bauteils 800 ist angrenzend an eine dem Substrat 210 abgewandte Oberfläche der Schicht 810 angeordnet. Auf einer dem Substrat 210 abgewandten Oberfläche der dritten Struktur 250b des zweiten optischen Bauteils 200b ist eine Schicht 820, beispielsweise aus einem Metall, angeordnet. Die Schicht 820 kann damit eine Aperturblende des optischen Bauteils 800 bilden. Die beiden optischen Bauteile 200a, 200b des optischen Bauteils 800 sind nicht wie aus dem Stand der Technik bereits bekannt, als zuvor separate hergestellte Komponenten (Wafer) übereinander gestapelt worden, sondern in mehreren Abformprozessen übereinander abgeformt worden. Dies kann beispielsweise in einem Verfahren gemäß einem Ausführungsbeispiel der vorliegenden Erfindung erfolgt sein, in dem die Schritte 110, 120, 140 wiederholt nacheinander ausgeführt worden sind. Dabei ist zu beachten, dass der Durchgangsbereich 240 mit allen Strukturen aus dem ersten aushärtbaren Material, welches löslich für das Lösungsmittel ist, fluidisch verbunden wird.

Fig. 8b zeigt eine schematische Darstellung des Schichtaufbaus der Anordnung aus Fig. 8a nach dem Herauslösen einzelner Schichten bzw. der ersten Strukturen 220a, 220b aus dem ersten aushärtbaren Material. Die ersten Strukturen 220a, 220b können beispielsweise durch Einbringen eines Lösungsmittels, wie es in dem Schritt 130 des Verfahrens 100 gemäß Fig. 1 beschrieben wurde, herausgelöst worden sein. Anstelle der ersten Strukturen 220a, 220b sind daher Lufträume 270a, 270b gebildet.

Gemäß weiteren Ausführungsbeispielen kann in dem Freiraum 260, nicht transparentes aushärtbares (beispielsweise thermisch aushärtbares) Material eingefüllt und ausgehärtet werden, um eine Abstandshalterstruktur (vergleichbar der Abstandshaltstruktur 510 gemäß den Figuren 5a und 5b), welche zur Unterdrückung von Falschlicht bei den optischen Bauteilen 800, 800' dient, zu bilden.

Die optischen Bauteile 800, 800' können beispielsweise durch Sägen entlang der gestrichelten Linien 830 und 840 von dem Substrat 210 entfernt werden und voneinander separiert werden.

Ferner können, gemäß weiteren Ausführungsbeispielen die optischen Bauteile 800, 800' von dem Substrat 210 getrennt werden, indem die optischen Bauteile 800, 800' in ein Lösungsmittelbad getaucht werden. Beispielsweise zeitgleich mit dem Herauslösen der ersten Strukturen 220 aus dem ersten aushärtbaren Material. Zwischen dem Substrat 210 und den optischen Bauteilen 800, 800' kann dabei beispielsweise eine ganzflächige oder selektive Schicht aus dem ersten aushärtbaren Material angeordnet sein, welche sich bei Eintauchen der optischen Bauteile 800, 800' in das Lösungsmittelbad löst, wodurch sich die Verbindung zwischen den optischen Bauteilen 800, 800' und dem Substrat 210 damit auch löst und die optischen Bauteile 800, 800' separiert werden.

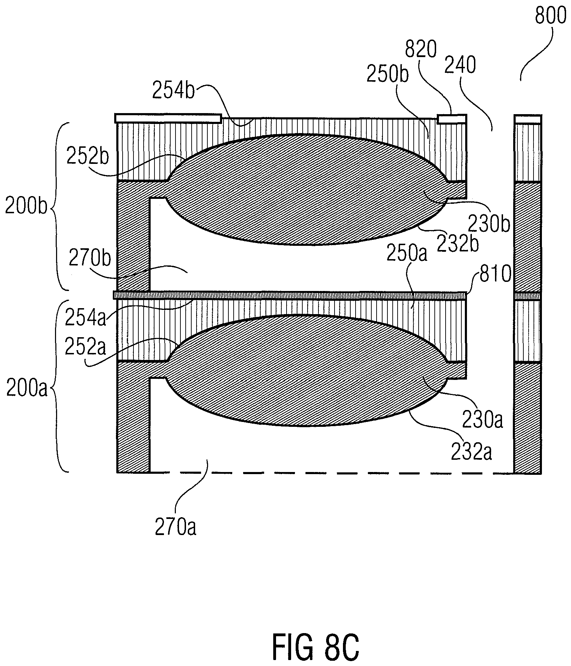

Fig. 8c zeigt das optische Bauteil 800 separiert von dem optischen Bauteil 800' und separiert von dem Substrat 210. Das optische Bauteil 800 bildet damit einen Schichtstapel 800 aus aushärtbarem Material mit in Schichtdickerichtung hintereinander geschalteten optisch relevanten Flächen, der Strukturen 230a, 230b, 250a, 250b der optischen Bauteile 200a, 200b. Die zweite Struktur 230a des optischen Bauteils 200a, weist eine erste optisch relevante Fläche 232a auf. Zwischen der zweiten Struktur 230a des ersten optischen Bauteils 200a und der dritten Struktur 250a des ersten optischen Bauteils 200a ist eine zweite optisch relevante Fläche (beispielsweise eine erste Grenzfläche) 252a zweier verschiedener aushärtbarer Materialien (also aus dem zweiten aushärtbaren Material der zweiten Struktur 230a und dem dritten aushärtbaren Material der dritten Struktur 250a) gebildet. Weiterhin weist die dritte Struktur 250a des ersten Bauteils 200a eine dritte optisch relevante Fläche 254a auf. Zwischen der dritten optisch relevanten Fläche 254a und einer vierten optisch relevanten Fläche 232b der zweiten Struktur 230b des zweiten optischen Bauteils 200b ist der Hohlraum 270b ausgebildet. Zwischen der dritten optisch relevanten Fläche 254a und dem Hohlraum 270b kann die dielektrische Schicht 810 ausgebildet sein, welche für die optischen Eigenschaften des Schichtstapels 800 irrelevant sein kann. Zwischen der zweiten Struktur 230b des zweiten optischen Bauteils 200b und der dritten Struktur 250b des zweiten optischen Bauteils ist eine fünfte optisch relevante Fläche (beispielsweise eine zweite Grenzfläche) 252b zweier aushärtbarer Materialien ausgebildet. Weiterhin weist die dritte Struktur 250b des zweiten optischen Bauteils 200b eine sechste optisch relevante Fläche 254b auf, oberhalb welcher die beispielsweise metallische Schicht 820 strukturiert sein kann.

Der Schichtstapel 800 weist damit in Schichtdickerichtung hintereinander verschaltete optisch relevante Oberflächen (erste optisch relevante Fläche 232a, zweite optisch relevante Fläche 252a, dritte optisch relevante Fläche 254a, vierte optisch relevante Fläche 232b, fünfte optisch relevante Fläche 252b, sechste optisch relevante Fläche 254b) auf.

Die beiden Hohlräume 270a, 270b sind über den Durchgang 240 bzw. den Kanal 240 mit der Außenwelt bzw. nach außen fluidisch verbunden. Der Kanal 240 kann dazu lateral versetzt zu den optisch relevanten Oberflächen in Schichtdickerichtung verlaufen. Gemäß weiteren Ausführungsbeispielen können auch mehrere Kanäle 240 ausgebildet sein. Insbesondere können die Kanäle 240 auch parallel zu den optisch relevanten Oberflächen oder in einer beliebigen Richtung verlaufen um Hohlräume des optischen Schichtstapels miteinander zu verbinden und eine Verbindung zur Außenwelt herzustellen.

Die optisch relevanten Flächen 252a, 252b zweier verschiedener aushärtbarer Materialien mit verschiedenen Brechungsindizes bilden mit den optisch relevanten Flächen 232a, 232b sowie 254a, 254b Achromaten um chromatische Abberationen zu reduzieren.

Obwohl die in Fig. 8c gezeigten hintereinander geschalteten optisch relevanten Oberflächen teilweise identisch sind, so können in weiteren Ausführungsbeispielen die optisch relevanten Oberflächen des Schichtstapels voneinander abweichen und damit verschiedene Brechungseigenschaften aufweisen. Ferner kann in weiteren Ausführungsbeispielen die dielektrische Schicht 810 nicht dielektrisch sein oder vollständig weggelassen sein. Weiterhin kann in weiteren Ausführungsbeispielen die Schicht 820 nicht metallisch sein oder weggelassen sein.

Gemäß weiteren Ausführungsbeispielen kann die dielektrische Schicht 810, bzw. der dielektrische Schichtstapel 810 zur Einstellung des Transmissionsverhaltens des optischen Schichtstapels 800 dienen. Die dielektrische Schicht 810 bzw. der dielektrische Schichtstapel 810 kann dabei beispielsweise als Antireflexschicht oder als Filterschicht dienen, beispielsweise um einfallende Strahlung bestimmter Wellenlängenbereiche (beispielsweise im Infrarot-Bereich) zu blocken.

Gemäß weiteren Ausführungsbeispielen kann auf eine Schicht 820 (beispielsweise eine metallische Blendenschicht) eine dielektrische Schicht 810 bzw. ein dielektrischer Schichtstapel 810 folgen und umgekehrt. Mit anderen Worten können sowohl eine oder mehrere oben beschriebene Schichten 820 (beispielsweise metallische Blendenschichten), als auch eine oder mehrere dielektrische Schichten 810 bzw. dielektrische Schichtstapel 810 an beliebigen Stellen in einem optischen Schichtstapel 800 angeordnet sein, um eine gewünschte optische Funktion des optischen Schichtstapels 800 zu gewährleisten.

Ferner können in weiteren Ausführungsbeispielen die dritten Strukturen 250a, 250b aus demselben aushärtbaren Material wie die zweiten Strukturen 230a, 230b gebildet sein oder weggelassen werden.

Obwohl in dem in Fig. 8c gezeigten konkreten Ausführungsbeispiel die zweiten Strukturen 230a, 230b aus demselben Material gebildet sind, können in weiteren Ausführungsbeispielen die zweiten Strukturen 230a, 230b aus verschiedenen Materialien gebildet sein. Dies gilt ebenso für die dritten Strukturen 250a und 250b.

Obwohl das in Fig. 8c gezeigte optische Bauteil 800 bzw. der Schichtstapel 800 aus einer Anordnung zweier optischer Bauteile 200a, 200b gebildet ist, so kann es in weiteren Ausführungsbeispielen auch aus einer beliebigen Anzahl optischer Bauteile 200, 300, 400, 500 gebildet sein. Mit anderen Worten gesagt, kann das optische Bauteil 800 einen Schichtstapel 800 aus einer beliebigen Anzahl übereinander abgeformter, beliebig geformter optisch relevanter Oberflächen bilden. Zwischen einzelnen dieser optisch relevanten Oberflächen können dabei Hohlräume gebildet sein, welche beispielsweise fluidisch mit einander und mit der Außenwelt verbunden sind, beispielsweise über einen Kanal, welcher in Schichtdickerichtung bzw. in Schichtstapelrichtung lateral versetzt zu den optisch relevanten Oberflächen durch den Schichtstapel verläuft.

Weiterhin kann das in Fig. 8c gezeigte optische Bauteil 800 bzw. der Schichtstapel 800 eine Umrandung 510, beispielsweise aus aushärtbarem nicht transparentem Material, wie beispielsweise eine Abstandshalterstruktur 510 (wie sie in Fig. 5 beschrieben wurde) aufweisen. Ferner kann die Umrandung 510 Federn oder Nute aufweisen. Die Nute oder Federn können beispielsweise umlaufend um das optische Bauteil 800 in den Oberflächen der Umrandung 510 integriert sein, oder auch peripher das heißt, nur in bestimmten Bereichen der Oberflächen der Umrandung 510 ausgebildet sein. Weiterhin kann die Umrandung 510 Perforationen (sogenannte "dicing reliefs"), vergleichbar den Perforationen 710 gemäß Figur 7, aufweisen.

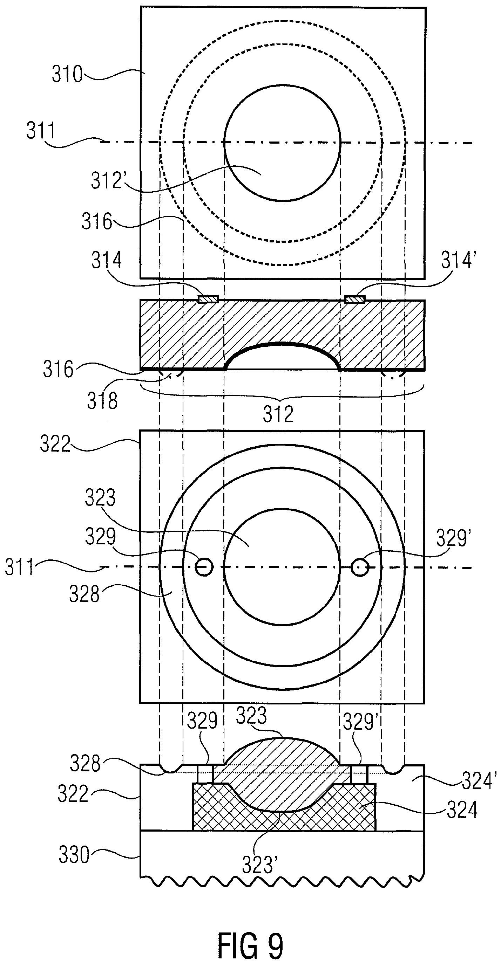

Fig.9 zeigt eine Unteransicht eines Abformwerkzeuges 310 und eine Schnittansicht des Abformwerkzeuges 310, sowie eine Draufsicht auf ein abgeformtes Element 322 und eine Schnittansicht des abgeformten Elements 322.

Die Schnittansichten des in Fig. 9 gezeigten Abformwerkzeugs 310 und des abgeformten Elements 322 sind jeweils durch einen Schnitt durch das Abformwerkzeug 310 bzw. das abgeformte Element 322 entlang einer Schnittachse 311 entstanden.

Das in Fig. 9 gezeigte Abformwerkzeug 310 weist eine Abformfläche 312 mit einem optischen Funktionsflächenbereich 312', auf. Die Abformfläche 312 ist, wenn das Abformwerkzeug 310 auf einer Oberfläche 330 aufgesetzt bzw. oberhalb derselben angeordnet wird, der Oberfläche 330 zugewandt. Das in Fig. 9 gezeigte abgeformte Element 322 weist eine erste Struktur 324 aus einem ersten aushärtbaren Material auf, welche in einem vorhergehenden Schritt auf einer Oberfläche 330 abgeformt wurde. Die erste Struktur 324 ist von einer zweiten Struktur 324' aus einem zweiten aushärtbaren Material, außer im Bereich der Oberfläche 330 vollständig umgeben. Die zweite Struktur 324' ist mit dem Abformwerkzeug 310 auf der ersten Struktur 324 abgeformt wurden. Das erste aushärtbare Material ist hierbei nach Aushärtung für ein Lösungsmittel löslich, während das zweite aushärtbare Material nach Aushärtung nicht löslich für das Lösungsmittel ist.

Der optische Funktionsflächenbereich 312' des Abformwerkzeugs 310 dient zur Definition einer optisch relevanten Oberfläche 323 des abgeformten Elements 322.

Weiterhin weist das Abformwerkzeug 310 eine umlaufende elastische Membran 316 an der Abformfläche 312 auf. Die elastische Membran 316 bedeckt die Abformfläche 312 vorliegend exemplarisch vollständig, obwohl eine teilweise Bedeckung ebenfalls möglich wäre, und ist in einem Umlaufbereich, der einen lateral geschlossenen Weg um den optischen Funktionsflächenbereich 312' bildet, nicht haftend aber an den Grenzen des Umlaufbereichs mit der Abformfläche 312 verbunden, so dass sich beim Anlegen eines Druckes an das Fluid, wie z.B. Luft, zwischen der Abformfläche 312 und einer Innenseite der elastischen Membran 316, ein Kanal 318 ausbildet, welcher sich, wenn das Abformwerkzeug 310 auf der Oberfläche 330 aufgesetzt wird, in Richtung der Oberfläche 330 vorwölbt, um dort noch nicht ausgehärtetes aushärtbares Material zu verdrängen und somit den Druck letzteren Materials zu erhöhen. Das Aufbringen eines Drucks in der elastischen Membran 316 und damit die Erzeugung des Kanals 318 führt während dem Abform- und Aushärtschritt zu einem Nachfließen von weiteren aushärtbaren Material, in dem Bereich der optisch relevanten Oberfläche 323 des abgeformten Elements 322, um eine Schrumpfung des Polymervolumens während der Aushärtung auszugleichen. Der durch die während eines Abform- und Aushärtschritts unter Druck stehende Membran 316 erzeugte Kanal 318 hinterlässt in dem abgeformten Element 322 einen umlaufenden Graben 328, der allerdings ohne weitere Bewandtnis bleiben kann.

Weiterhin weist das Abformwerkzeug eine erste Blendenstruktur 314 und eventuell weitere Blendenstrukturen 314' auf. Die Blendenstrukturen 314, 314' dienen zur Abschirmung von Bereichen, welche während einer Bestrahlung durch das Abformwerkzeug 310 hindurch nicht ausgehärtet werden sollen. Die Blendenstrukturen 314, 314' führen damit in dem abgeformten Element 322 zu einem senkrecht zur Oberfläche 330 durch die zweite Struktur 324' verlaufenden ersten Kanal 329 und einem senkrecht zur Oberfläche 330 durch eventuell vorhandene zweite Strukturen 324' verlaufende weitere Kanäle 329', in welchen nach einem Reinigungsvorgang bzw. Entwicklungsvorgang kein ausgehärtetes Material angeordnet ist. Die Kanäle 329, 329' können beispielsweise zum Eingeben eines Lösungsmittels, zum Lösen von löslichem aushärtbaren Material (wie beispielsweise das erste aushärtbare Material der ersten Struktur 324), um Lufträume zu erzeugen, genutzt werden.

Die Kanäle 329, 329' verbinden die erste Struktur 324 fluidisch mit der Außenwelt bzw. bilden einen fluidische Verbindung aus dem abgeformten Element 322 heraus um beispielsweise ein Lösungsmittel einzubringen. Die erste Struktur 324 kann dann durch Einbringen eines Lösungsmittels durch die Kanäle 329, 329' gelöst werden, so dass sich ein Hohlraum zwischen einer weiteren optisch relevanten Oberfläche 323' der zweiten Struktur 324' und der Oberfläche 330 bildet, welcher fluidisch nach außen verbunden ist. Die Oberfläche 330 kann beispielsweise ein Substrat sein oder eine weitere optisch relevante Oberfläche, welche in einem vorherigen Schritt, vor dem Abformen der ersten Struktur 324 abgeformt wurde.

Das Lösungsmittel zum Lösen des ersten aushärtbaren Materials kann ein gasförmiges oder auch ein flüssiges Lösungsmittel sein. Die aushärtbaren Materialien können beispielsweise UV-härtende Materialien oder thermisch härtende Materialien sein.

Zusammenfassend lässt sich sagen, dass Ausführungsbeispiele eine Anordnung und ein Verfahren für die kostengünstige Realisierung opto-elektronischer-mechanischer Strukturen in Nutzenfertigung auf Basis von UV-Polymeren und/oder thermisch aushärtbaren Polymeren betreffen. UV-härtende Polymere können besonders in optischen Wirkflächen der hergestellten optischen Komponenten Verwendung finden, während thermisch aushärtbare Polymere besonders in nicht transparenten Bereichen, also außerhalb optisch wirksamer Wirkflächen der hergestellten optischen Komponenten Verwendung finden können.

Entgegen dem Stand der Technik können sich die optischen Komponenten nicht mehr auf Glassubstraten befinden, die dann für die Herstellung komplexer Module gestapelt werden. Stattdessen können die Polymerlinsen ohne Nutzung von im Strahlengang verbleibenden Substraten in mehrfach nacheinander ausgeführten Abformprozessen auf einem gemeinsamen temporären Substrat erstellt werden, das im späteren Aufbau nicht mehr vorhanden sein kann. Das temporäre Substrat kann daher sehr dick und mithin mechanisch stabil sein und insbesondere eine äußerst geringe Durchbiegung aufweisen.

Die übereinander abgeformten Schichten, also beispielsweise die abgeformten Polymerlinsenlagen oder die einzelnen abgeformten und ausgehärteten Strukturen, welche beispielsweise einen Schichtaufbau bilden, die durchgängig als auch unterbrochen sein können, können dabei aus unterschiedlichen Materialien gebildet sein und mithin unterschiedliche mechanische, optische, chemische und elektrische Eigenschaften aufweisen. Der Schichtaufbau kann in Bereichen neben den optischen Funktionsflächen über Durchbrüche verfügen, die einen Zugang von Medien wie Flüssigkeiten und Gase vom Außenbereich durch Teile des Schichtaufbaus bis hin zu gewünschten Schichtlagen ermöglichen. Durch Wahl der Materialien der einzelnen Schichten kann damit u.a. erreicht werden, dass Lösungsmittel von außen an eine bestimmte Schicht (beispielsweise eine erste Struktur 220 gemäß Fig. 2a) im Schichtstapel herangeführt und das Material der Schicht durch Überführung in den gelösten Zustand entfernt wird. An der Position der ursprünglichen Schicht, die zumeist eine über die Fläche des Substrates nicht durchgängige Struktur aufweist, entsteht damit ein Luftraum (beispielsweise ein Luftraum 270 gemäß Figur 2b). Durch Verwendung derartiger sogenannter Opferschichten können damit Lufträume ohne Stapeln mehrerer Glassubstrate oder Polymerlinsenlagen, wie dies in der "monolithic lens technology" praktiziert wird, mit hoher lateraler und axialer Präzision hergestellt werden.

Die Durchbruchsbereiche neben den für die optische Funktion genutzten Arealen können einen großen Flächenanteil einnehmen, so dass die optisch genutzte Fläche praktisch über Stege mit der Peripherie verbunden ist.

Weiterhin können bei Ausführungsbeispielen, neben Schichten, die mittels UV-Replikation aufgebracht werden, metallische als auch dielektrische Schichten durch entsprechende Verfahren (Abscheidung aus der Gas- oder Flüssigkeitsphase) aufgebracht werden, die durch Maskierungs- bzw. Lift-Off-Verfahren auch über die Fläche des Substrates diskontinuierlich sein können. Metallische Schichten können dabei insbesondere zur Realisierung elektrisch leitfähiger Strukturen aufgebracht werden. Diese können insbesondere zur Realisierung von Kondensatorelementen genutzt werden. Die Abformung/Abscheidung der Schichten kann weiterhin in Strukturen ("Spacerwafer") mit Durchgangslöchern oder Kavitäten erfolgen. Derartige "Spacerwafer" (beispielsweise gebildet aus Abstandshalterstrukturen 510 gemäß den Figuren 5a und 5b) werden dazu auf dem, beispielsweise temporären Substrat an geeigneter Stelle der Schichtfolge fixiert und die durch Abformung herzustellende Linsenlage ist mithin über die Substratfläche diskontinuierlich. Die zusätzlichen Strukturen können aus einem anderen Material als die Schichten hergestellt und insbesondere undurchsichtig sein. Vorzugsweise können das Material der "Spacerwafer" (sogenanntes "Spacermaterial") und die Schichtmaterialien in ihren thermischen Ausdehnungskoeffizienten angepasst werden. Eine Anpassung an den thermischen Ausdehnungskoeffizienten des temporären Substrates ist nicht zwingend.

Gemäß weiteren Ausführungsbeispielen, kann zur Herstellung von Abstandshalterstrukturen bzw. optisch nicht transparenten Bereichen zwischen mehreren optischen Bauteilen, welche beispielsweise zur Unterdrückung von Falschlicht dienen, kein zusätzlicher "Spacerwafer" auf ein Substrat bzw. einen temporären Wafer der optischen Bauteile aufgebracht werden. Die Abformung der Schichten der optischen Bauteile kann auf dem temporären Wafer dabei so erfolgen, dass räumlich separierte Module (beispielsweise die optischen Bauteile 800, 800' gemäß den Figuren 8a und 8b) entstehen. Schwarzes bzw. nicht transparentes Polymer kann in Bereiche (beispielsweise in den Freiraum 260 gemäß den Figuren 8a und 8b) zwischen den Modulen bzw. zwischen den optischen Bauteilen gegossen werden und härtet dort beispielsweise thermisch oder durch UV-Bestrahlung aus, um Abstandshalterstrukturen bzw. einen gegossenen "Spacerwafer" zu bilden.

Unabhängig, wie die Abstandshalterstrukturen bzw. der "Spacerwafer" erzeugt wurden, kann der temporäre Wafer dann über ein Lösungsmittelbad von den abgeformten Modulen, also den optischen Bauteilen, die in dem auf dem temporären Substrat angeordneten oder gegossenem "Spacerwafer" eingebettet sind, gelöst werden.

Die Abstandshalterstrukturen können nach dem Separieren der einzelnen optischen Bauteile voneinander, dann nicht transparente Seitenwände der einzelnen optischen Bauteile bilden. Vor allem können die Abstandshalterstrukturen an ihren Oberflächen Feder und/oder Nute und/oder Perforationen aufweisen.

Die Parameter der durch Abformung herzustellenden optischen Komponenten, also beispielsweise der herzustellenden Strukturen aus aushärtbaren Materialen oder der optischen Bauteile, wie beispielsweise Profilverlauf, Dicke, Berandung, Abstand zu Nachbarn usw. können über die Fläche des Substrates variieren.

Durch den Schichtaufbau bei Ausführungsbeispielen also beispielsweise bei optoelektronischen mechanischen Systeme, bei optischen Bauteile oder herzustellenden Strukturen ohne Verbleib eines Glaswafers bzw. eines Glassubstrates im finalen System können Linsen mit geringeren Mittendicken realisiert werden, als das bisher im Stand der Technik möglich war, die Vorteile in optischer Abbildungsqualität als auch in der Baulänge optischer Systeme bieten.

Durch die Möglichkeit der Entfernung von Zwischenschichten bei Ausführungsbeispielen durch ein geeignetes Lösungsmittel können Lufträume ohne Fügen von separaten Wafern realisiert werden. Dies führt potenziell zu höheren Prozessausbeuten und mithin geringeren Herstellungskosten.

Anwendungen können Ausführungsbeispiele in der Herstellung mikrooptisch-elektromechanischer Systeme (MOEMS) durch Replikationsprozesse wie z.B. eine Waferlevelfertigung von Kameraobjektiven und optischen Sensoren finden.

## Patentansprüche

1. Verfahren zum Herstellen eines optischen Bauteils aus aushärtbaren Material mit folgenden Schritten:
Abformen und Aushärten (110) einer ersten Struktur (220) aus einem ersten aushärtbaren Material auf einem Substrat (210) ;
Abformen und Aushärten (120) einer zweiten Struktur (230) aus einem zweiten aushärtbaren Material auf einer dem Substrat (210) abgewandten ersten Oberfläche der ersten Struktur (220), so dass sich an der ersten Oberfläche der ersten Struktur (220) eine Grenzfläche zwischen der ersten Struktur (220) und der zweiten Struktur (230) ausbildet und so dass die erste Struktur (220) von der zweiten Struktur (230) an einem Durchgangsbereich (240) nicht bedeckt ist, wobei das erste aushärtbare Material nach Aushärtung löslich für das Lösungsmittel ist und das zweite aushärtbare Material nach Aushärtung unlöslich für das Lösungsmittel ist;
Abformen und Aushärten (140) einer dritten Struktur (250) aus einem dritten aushärtbaren Material auf einer dem Substrat abgewandten ersten Oberfläche der zweiten Struktur (230), so dass sich an der ersten Oberfläche der zweiten Struktur (230) eine Grenzfläche zwischen der zweiten Struktur (230) und der dritten Struktur (250) ausbildet und so dass der Durchgangsbereich (240) durch die dritte Struktur (250) nicht versperrt wird, wobei das dritte aushärtbare Material nach Aushärtung unlöslich für das Lösungsmittel ist;
Einbringen (130) eines Lösungsmittels in den Durchgangsbereich (240) nach Abformen und Aushärten der zweiten Struktur (230), um das erste aushärtbare Material der ersten Struktur (220) zu lösen, so dass ein Leerraum (270) zwischen der zweiten Struktur (230) und einer Oberfläche des Substrates (210) gebildet wird.

2. Verfahren gemäß Anspruch 1, bei dem das Abformen und Aushärten (110) der ersten Struktur (220) ortsselektiv erfolgt, so dass ein erster Bereich des Substrates (210) freiliegt, und wobei das Abformen und Aushärten (120) der zweiten Struktur (230) so durchgeführt wird, dass vor dem Einbringen (130) des Lösungsmittels, zwischen der zweiten Struktur (230) und dem ersten Bereich aushärtbares Material abgeformt und ausgehärtet ist, das nach Aushärtung unlöslich für das Lösungsmittel ist.

3. Verfahren gemäß einem der Ansprüche 1 oder 2, das ferner den folgenden Schritt umfasst:
Abformen und Aushärten von weiterem aushärtbaren Material (510) in einem freiliegenden zweiten Bereich (260) der Oberfläche des Substrates (210), wobei das weitere aushärtbare Material (510) nach Aushärtung für einen Nutzwellenlängenbereich für den nach Aushärtung das zweite aushärtbare Material strahlungsundurchlässig ist.

4. Verfahren gemäß einem der Ansprüche 1 bis 3, das ferner den folgenden Schritt umfasst:
Entfernen (150) des Substrates (210).

5. Verfahren gemäß einem der Ansprüche 1 bis 4, bei dem das Substrat (210) mit einer Ablöseschicht beschichtet ist, die löslich für das Lösungsmittel ist, so dass beim Einbringen (130) des Lösungsmittels die herzustellende Struktur gelöst wird.

6. Verfahren gemäß einem der Ansprüche 1 bis 5, das ferner die folgenden Schritte aufweist:
Abformen und Aushärten einer ersten Struktur (220b) eines zweiten optischen Bauteils (200b) aus dem ersten aushärtbaren Material auf der dritten Struktur (250a) eines ersten optischen Bauteils (200a);
Abformen und Aushärten einer zweiten Struktur (230b) des zweiten optischen Bauteils (200b) aus dem zweiten aushärtbaren Material auf der ersten Struktur (220b) des zweiten optischen Bauteils (200b), so dass die erste Struktur (220b) des zweiten optischen Bauteils (200b) an dem Durchgangsbereich (240) nicht bedeckt ist; und
wobei das Einbringen des Lösungsmittel in den Durchgangsbereich (240) ferner nach dem Abformen und Aushärten der zweiten Struktur (230b) des zweiten optischen Bauteils (200b) erfolgt, um ferner das erste aushärtbare Material der ersten Struktur (220b) des zweiten optischen Bauteils (200b) zu lösen, so dass ferner ein weiterer Leerraum (270b) zwischen der zweiten Struktur (230b) des zweiten optischen Bauteils (200b) und der zweiten
Struktur (230a) des ersten optischen Bauteils (200a) gebildet wird, der fluidisch mit dem Leerraum (270a) zwischen der zweiten Struktur (230a) des ersten optischen Bauteils (200a) und dem Substrat (210) verbunden ist.

7. Verfahren gemäß einem der vorhergehenden Ansprüche,
wobei das optische Bauteil eine optische Linse ist.

8. Optisches Bauteil (200) aus ausgehärtetem aushärtbarem Material mit:
einer ersten Hauptseite (280);
einer optisch relevanten Oberfläche (230')
einer zweiten Hauptseite (280'), die der ersten Hauptseite (280) abgewandt ist und die optisch relevante Oberfläche (230') aufweist;
einem Randbereich (290), der zwischen der zweiten Hauptseite (280') und einem Rand der optisch relevanten Oberfläche (230') angeordnet ist, um die optisch relevanten Oberfläche (230') in Normalenrichtung (N1) von der zweiten Hauptseite (280') zu beabstanden;
einem Durchgang (240; 329, 329'); und
einer Grenzfläche zweier verschiedener aushärtbarer Materialien (230, 250) mit verschiedenen
Brechungsindizes, so dass die Grenzfläche und die optisch relevante Oberfläche (230') in einer Normalenrichtung zu der ersten Hauptseite (280) und der zweiten Hauptseite (280') hintereinander geschaltet sind;
wobei der Durchgang (240; 329, 329') lateral versetzt zu der optisch relevanten Oberfläche (230') eine fluidische Verbindung von der ersten Hauptseite (280) zu der zweiten Hauptseite (280') herstellt; und
wobei der Durchgang (240; 329, 329') lateral versetzt zu der optisch relevanten Oberfläche (230') in Schichtstapelrichtung durch das optische Bauteil verläuft.

9. Optisches Bauteil gemäß Anspruch 8, ferner umfassend:
einen die erste Hauptseite (280) und die zweite Hauptseite (280') des optischen Bauteils umschließenden Rand (510) aus einem, für einen Nutzwellenlängenbereich des optischen Bauteils strahlungsundurchlässigem aushärtbarem Material.

10. Optisches Bauteil gemäß Anspruch 9, bei dem der Rand (510) an einem an der ersten Hauptseite und/ oder der zweiten Hauptseite befindlichen Teil einer Oberfläche des Randes (510) eine Nut (520) zur Aufnahme einer Feder aufweist und/oder eine Feder zur Einbringung in eine Nut aufweist.

11. Optisches Bauteil aus:
einem Substrat (210);
einer abgeformten und ausgehärteten zweiten Struktur (230) aus einem aushärtbaren Material auf einer dem Substrat (210) abgewandten ersten Oberfläche;
einen Leerraum (270) zwischen der zweiten Struktur (230) und einer Oberfläche des Substrates (210), wobei der Leerraum (270) an einem Durchgangsbereich (240) von der zweiten Struktur (230) nicht bedeckt ist; und wobei eine Grenzfläche zwischen der zweiten Struktur (230) und dem Leerraum (270) ausgebildet ist,
**dadurch gekennzeichnet, dass**
einer weiteren abgeformten und ausgehärteten dritten Struktur (250) aus einem weiteren aushärtbaren Material auf einer dem Substrat (210) abgewandten Oberfläche der zweiten Struktur (230), wobei an der Oberfläche der zweiten Struktur (230) eine Grenzfläche zwischen der zweiten Struktur (230) und der weiteren dritten Struktur (250) gebildet ist, und wobei der Durchgangsbereich (240) durch die weitere dritten Struktur (250) nicht versperrt wird, wobei die aushärtbaren Materialien für die Strukturen (230, 250) nach Aushärtung unlöslich für ein Lösungsmittel sind.

## Claims

1. Method for manufacturing an optical component of curable material, comprising:
molding and curing (110) a first structure (220) of a first curable material on a substrate (210);
molding and curing (120) a second structure (230) of a second curable material on a first surface of the first structure (220) facing away from the substrate (210), so that at the first surface of the first structure (220) a boundary surface between the first structure (220) and the second structure (230) forms and so that the first structure (220) is not covered by the second structure (230) in a passage area (240), wherein the first curable material is soluble for the solvent after curing and the second curable material is insoluble for the solvent after curing;
molding and curing (140) a third structure (250) of a third curable material on a first surface of the second structure (230) facing away from the substrate, so that at the first surface of the second structure (230) a boundary surface forms between the second structure (230) and the third structure (250) and so that the passage area (240) through the third structure (250) is not blocked, wherein the third curable material is insoluble for the solvent after curing;
introducing (130) a solvent into the passage area (240) after molding and curing the second structure (230) in order to dissolve the first curable material of the first structure (220) so that a cavity (270) is formed between the second structure (230) and a surface of the substrate (210).

2. Method according to claim 1, wherein molding and curing (110) of the first structure (220) is executed locally selectively, so that a first area of the substrate (210) is exposed, and wherein molding and curing (120) of the second structure (230) is executed so that before introducing (130) the solvent between the second structure (230) and the first area, curable material is molded and cured which is insoluble for the solvent after curing.

3. Method according to one of claims 1 to 2, further comprising:
molding and curing a further curable material (510) in an exposed second area (260) of the surface of the substrate (210), wherein the further curable material (510) after curing for radiation for a useful wavelength range for which the second curable material is impermeable after curing.

4. Method according to one of claims 1 to 3, further comprising:
removing (150) the substrate (210).

5. Method according to one of claims 1 to 4, wherein the substrate (210) is covered by a removal layer which is soluble for the solvent so that when introducing (130) the solvent the structure to be manufactured is dissolved.

6. Method according to one of claims 1 to 5, further comprising:
molding and curing a first structure (220b) of a second optical component (200b) of the first curable material on the third structure (250a) of a first optical component (200a);
molding and curing a second structure (230b) of the second optical component (200b) of the second curable material on the first structure (220b) of the second optical component (200b), so that the first structure (220b) of the second optical component (200b) is not covered in the passage area (240); and
wherein introducing the solvent into the passage area (240) is further executed after molding and curing the second structure (230b) of the second optical component (200b) in order to further dissolve the first curable material of the first structure (220b) of the second optical component (200b), so that further a further cavity (270b) is formed between the second structure (230b) of the second optical component (200b) and the second structure (230a) of the first optical component (200a) being fluidically connected to the cavity (270a) between the second structure (230a) of the first optical component (200a) and the substrate (210).

7. Method according to one of the preceding claims,
wherein the optical component is an optical lens.

8. Optical component (200) of curable material, comprising:
a first main side (280);
an optically relevant surface (230');
a second main side (280') facing away from the first main side (280) and comprising the optically relevant surface (230'); and
a boundary area (290) arranged between the second main side (280') and a boundary of the optically relevant surface (230') to space the optically relevant surface (230') in the normal direction (N1) apart from the second main side (280');
a passage (240; 329, 329'); and
a boundary surface of two different curable materials (230, 250) having different refractive indices, so that the boundary surface and the optically relevant surface (230') are connected in series in a normal direction to the first main side (280) and the second main side (280');
wherein the passage (240; 329, 329') produces a fluidic connection from the first main side (280) to the second main side (280') laterally offset from the optically relevant surface (230').
wherein the passage (240; 329, 329') is laterally offset from the optically relevant surface (230') through the optical component in layer stacking direction.

9. Optical component according to claim 8, further comprising:
a border (510) surrounding the first main side (280) and the second main side (280') of the optical component consisting of a curable material which is impermeable for radiation for a useful wavelength range of the optical component.

10. Optical component according to claim 9, wherein the border (510) comprises a groove (520) for receiving a tongue and/or a tongue for being introduced into a groove at a part of a surface of the border (510) located at the first main side and/or the second main side.

11. Optical component, comprising:
a substrate (210);
a molded and cured second structure (230) of a curable material on a first surface facing away from the substrate (210);
a cavity (270) between the second structure (230) and a surface of the substrate (210), wherein the cavity (270) is not covered by the second structure (230) in a passage area (240); and wherein a boundary surface is formed between the second structure (230) and the cavity (270),
**characterized by**
a further molded and cured third structure (250) of a further curable material on a surface of the second structure (230) facing away from the substrate (210), wherein at the surface of the second structure (230), a boundary surface is formed between the second structure (230) and the further third structure (250), and wherein the passage area (240) through the third structure (250) is not blocked, wherein the curable material for the structures (230, 250) is insoluble for a solvent after curing.

## Revendications

1. Procédé pour fabriquer un composant optique en matériau durcissable, aux étapes suivantes consistant à:
mouler et laisser durcir (110) une première structure (220) en un premier matériau durcissable sur un substrat (210);
mouler et laisser durcir (120) une deuxième structure (230) en un deuxième matériau durcissable sur une première surface de la première structure (220) opposée au substrat (210), de sorte que sur la première surface de la première structure (220) se forme une interface entre la première structure (220) et la deuxième structure (230) et de sorte que la première structure (220) ne soit pas recouverte par la deuxième structure (230) dans une zone de passage (240), où le premier matériau durcissable est, après durcissement, soluble pour le solvant et le deuxième matériau durcissable est, après durcissement, insoluble pour le solvant;
mouler et laisser durcir (140) une troisième structure (250) en un troisième matériau durcissable sur une première surface de la deuxième structure (230) opposée au substrat, de sorte que sur la première surface de la deuxième structure (230) se forme une interface entre la deuxième structure (230) et la troisième structure (250) et de sorte que la zone de passage (240) ne soit pas bloquée par la troisième structure (250), où le troisième matériau durcissable est, après durcissement, insoluble pour le solvant;
introduire (130) un solvant dans la zone de passage (240) après moulage et durcissement de la deuxième structure (230) pour dissoudre le premier matériau durcissable de la première structure (220), de sorte que soit formé un espace vide (270) entre la deuxième structure (230) et une surface du substrat (210).

2. Procédé selon la revendication 1, dans lequel le moulage et le durcissement (110) de la première structure (220) ont lieu de manière sélective quant à l'endroit, de sorte que soit exposée une première zone du substrat (210), et dans lequel le moulage et le durcissement (120) de la deuxième structure (230) sont réalisés de sorte qu'avant l'introduction (130) du solvant soit moulé et durci, entre la deuxième structure (230) et la première zone, le matériau durcissable qui, après durcissement, est insoluble pour le solvant.

3. Procédé selon l'une des revendications 1 ou 2, comportant par ailleurs l'étape consistant à:
mouler et laisser durcir un autre matériau durcissable (510) dans une deuxième zone exposée (260) de la surface du substrat (210), où l'autre matériau durcissable (510) est, après durcissement, imperméable au rayonnement pour une plage de longueurs d'onde utile pour le deuxième matériau durcissable après durcissement.

4. Procédé selon l'une des revendications 1 à 3, comportant par ailleurs l'étape suivante consistant à:
éliminer (150) le substrat (210).

5. Procédé selon l'une des revendications 1 à 4, dans lequel le substrat (210) est revêtu d'une couche de séparation qui est soluble pour le solvant, de sorte que, lors de l'introduction du solvant (130), la structure à fabriquer soit dissoute.

6. Procédé selon l'une des revendications 1 à 5, comportant par ailleurs les étapes suivantes consistant à:
mouler et laisser durcir une première structure (220b) d'un deuxième composant optique (200b) réalisé dans le premier matériau durcissable sur la troisième structure (250a) d'un premier composant optique (200a);
mouler et laisser durcir une deuxième structure (230b) du deuxième composant optique (200b) réalisé dans le deuxième matériau durcissable sur la première structure (220b) du deuxième composant optique (200b), de sorte que la première structure (220b) du deuxième composant optique (200b) ne soit pas recouverte dans la zone de passage (240); et
dans lequel l'introduction du solvant dans la zone de passage (240) a lieu par ailleurs après moulage et durcissement de la deuxième structure (230b) du deuxième composant optique (200b), pour dissoudre par ailleurs le premier matériau durcissable de la première structure (220b) du deuxième composant optique (200b) de sorte que soit formé par ailleurs un autre espace vide (270b) entre la deuxième structure (230b) du deuxième composant optique (200b) et la deuxième structure (230a) du premier composant optique (200a) qui est connecté en fluide à l'espace vide (270a) entre la deuxième structure (230a) du premier composant optique (200a) et le substrat (210).

7. Procédé selon l'une des revendications précédentes,
dans lequel le composant optique est une lentille optique.

8. Composant optique (200) en matériau durcissable durci, avec:
un premier côté principal (280);
une surface optiquement pertinente (230');
un deuxième côté principal (280') qui est opposé au premier côté principal (280) et présente la surface optiquement pertinente (230');
une zone de bord (290) qui est disposée entre le deuxième côté principal (280') et un bord de la surface optiquement pertinente (230'), pour éloigner la surface optiquement pertinente (230') dans la direction normale (N1) du deuxième côté principal (280');
un passage (240; 329, 329'); et
une interface de deux matériaux durcissables différents (230, 250) à indices de réfraction différents, de sorte que l'interface et la surface optiquement pertinente (230') soient connectées l'une derrière l'autre dans une direction normale au premier côté principal (280) et au deuxième côté principal (280');
dans lequel le passage (240; 329, 329') établit, de manière décalée latéralement par rapport à la surface optiquement pertinente (230'), une connexion en fluide du premier côté principal (280) au deuxième côté principal (280'); et
dans lequel le passage (240; 329, 329') s'étend de manière décalée latéralement par rapport à la surface optiquement pertinente (230'), dans la direction de l'empilement de couches, à travers le composant optique.

9. Composant optique selon la revendication 8, comportant par ailleurs:
un bord (510), entourant le premier côté principal (280) et le deuxième côté principal (280') du composant optique, réalisé en un matériau durcissable imperméable au rayonnement pour une zone de longueurs d'onde utile du composant optique.

10. Composant optique selon la revendication 9, dans lequel le bord (510) présente, sur une partie d'une surface du bord (510) située du premier côté principal et/ou du deuxième côté principal, une rainure (520) destinée à recevoir une languette et/ou présente une languette destinée à être introduite dans une rainure.

11. Composant optique, constitué de:
un substrat (210);
une deuxième structure moulée et durcie (230) en un matériau durcissable sur une première surface opposée au substrat (210); un espace vide (270) entre la deuxième structure (230) et une surface du substrat (210), où l'espace vide (270) n'est pas recouvert, dans une zone de passage (240), par la deuxième structure (230); et où une interface est formée entre la deuxième structure (230) et l'espace vide (270),
**caractérisé par**
une autre troisième structure moulée et durcie (250) en un autre matériau durcissable sur une surface, opposée au substrat (210), de la deuxième structure (230), où sur la surface de la deuxième structure (230) est formée une interface entre la deuxième structure (230) et l'autre troisième structure (250), et où la zone de passage (240) n'est pas bloquée par l'autre troisième structure (250), où les matériaux durcissables pour les structures (230, 250) sont, après durcissement, insolubles pour un solvant.
